# EUROPÄISCHE PATENTSCHRIFT

(11) **EP 2 316 867 B1**
(45) Veröffentlichungstag und Bekanntmachung des Hinweises auf die Patenterteilung: **09.05.2012**
(21) Anmeldenummer: 10188971.5
(22) Anmeldetag: 27.10.2010
(51) Int. Cl.: C08G 18/08, C08G 18/12, C08G 18/22, C08G 18/32, C08G 18/67, C08G 18/72, C08G 18/79, C09D 175/16, C09J 175/16, C08G 18/75, C08G 18/66, C08G 18/68

(54) **Zinnfreie, wässrige Polyurethandispersionen**
Tin-free, aqueous polyurethane dispersions
Dispersions de polyuréthane aqueuses sans étain

(30) Priorität: 31.10.2009 DE 102009051557
(43) Veröffentlichungstag der Anmeldung: 04.05.2011
(73) Patentinhaber: Bayer MaterialScience AG, 51368 Leverkusen (DE)
(72) Erfinder: Sommer, Stefan, Leverkusen, 51375 (DE); Luehmann, Erhard, 29699, Bomlitz (DE); Rische, Thorsten, Columbus, PA 31907-9477 (US); Lippemeier, Jürgen, 51147, Köln (DE)

(56) Entgegenhaltungen:
- EP-A1- 0 753 531
- WO-A1-2008/076297
- DE-A1-102007 006 492
- US-A1- 2007 218 391
- US-A1- 2008 220 275

## Beschreibung

Die vorliegende Erfindung betrifft strahlungshärtbare Beschichtungsmittel auf der Basis zinnfreier, wässriger Polyurethandispersionen, ein Verfahren zu deren Herstellung, die Verwendung der Beschichtungsmittel als Lacke und / oder Klebstoffe sowie Gegenstände und Substrate versehen mit diesen Lacken und / oder Klebstoffen.

Bislang werden wässrige, strahlenhärtbare Polyurethandispersionen über zinnkatalysierte Urethanisierung synthetisiert. Der prinzipielle Grund für die Katalyse liegt darin, dass bei der Synthese des Polyurethans Temperaturen von 70 °C nicht wesentlich überschritten werden dürfen, um eine thermisch initiierte Polymerisation der radikalisch polymerisierbaren, ungesättigen Gruppen zu vermeiden. Bei so niedrigen Temperaturen reagieren aliphatische Isocyanate, wie sie bevorzugt in wässrigen, strahlenhärtbaren Polyurethandispersionen verwendet werden, nur sehr langsam. Dibutylzinn-dilaurat (DBTL) ist aufgrund der hohen Selektivität für die OH-NCO-Addition und der hohen katalytischen Aktivität der mit Abstand bevorzugte Katalysator zur Synthese wässriger, strahlenhärtbarer Polyurethandispersionen.

Für die Katalyse der Urethanisierung sind aus der Lackapplikation von Ein-Komponenten (1K)- und Zwei-Komponenten (2K)-Polyurethandispersionen, d. h. die Umsetzung von hydroxyfunktionalisierten Polyurethandispersionen mit blockierten und nicht blockierten Polyisocyanaten durch Einbrennen auf dem Substrat, verschiedene andere Metall- und NichtMetall-Katalysatoren bekannt, wie z. B. tertiäre Amine, Zinn-, Zink-, Zirkonium-, Kupfer-, Bismuth-, Titan- und Molybdänverbindungen. Diese Katalysatoren sind für die Herstellung von 1K- oder 2K-Lacken optimiert, d. h. sie sollen z. B. ähnliche Topfzeiten und Temperatur-Aktivitätsprofile wie DBTL aufweisen oder die Isocyanat-Alkohol-Reaktion der Isocyanat-Wasser-Reaktion vorziehen. Für die Synthese des Polyurethans einer wässrigen, strahlenhärtbaren Polyurethandispersion sind sie aufgrund von Nebenreaktionen (z. B. Allophanatisierung), geringer katalytischer Aktivität bei für die Synthese von wässrigen, strahlenhärtbaren Polyurethandispersionen typischen Reaktionsbedingungen oder aufgrund der Eigenschaft, dass zu geringe Molekulargewichte erreicht werden, ungeeignet und DBTL deutlich unterlegen.

Wässrige, strahlenhärtbare Polyurethandispersionen, die mit ungeeigneten Katalysatoren hergestellt werden, zeigen ein gröberes Teilchenbild, sedimentieren sofort oder sind deutlich hochviskoser als wässrige, strahlenhärtbare Polyurethandispersionen gleicher Zusammensetzung, die mit DBTL katalysiert werden.

Q. Bell, Raw Materials an their Usage, in: Solvent-Borne Urethane Resins, Vol. 1: Surface Coatings, Chapman and Hall, New York, 1993, S. 153 ff. beschreibt verschiedene aminische und

Metall-basierte Katalysatoren, die die OH-NCO-Addition in 2K-Anwendungen katalysieren. Die Eignung dieser Katalysatoren zur Synthese des Polyurethans von wässrigen, strahlenhärtbaren Polyurethandispersionen wird nicht beschrieben.

WO 2008148739 Al beschreibt verschiedene Katalysatoren, die prinzipiell zur Herstellung des Polyurethans einer wässrigen, strahlenhärtbaren Polyurethandispersion geeignet sind. Deutlich bevorzugt, wie auch in den Beispielen verwendet, ist DBTL.

DE 102007006492 Al und EP 753531 Al beschreiben verschiedene Katalysatoren, die prinzipiell zur Herstellung des Polyurethans einer wässrigen, strahlenhärtbaren Polyurethandispersion geeignet sind. Deutlich bevorzugt, wie auch in den Beispielen verwendet, ist DBTL.

Es bestand ein allgemeines Bedürfnis, strahlenhärtbare, wässrige Polyurethandispersionen zur Herstellung von Holzlacken auf neue Lacke umzustellen, die keine Organozinnverbindungen enthalten. Ein repräsentatives Beispiel für eine solche Anforderung sind die geforderten Spezifikationen für Beschichtungen von IKEA in IOS-MAT-066, 2006, S. 4.

Es bestand die Aufgabe, alternative zinnfreie Polyurethane für wässrige, strahlenhärtbare Polyurethandispersionen zu den bestehenden DBTL-katalysierten Polyurethanen für wässrige, strahlenhärtbare Polyurethandispersionen bereitzustellen. Dabei sollen die Eigenschaften der wässrigen, strahlenhärtbaren Polyurethandispersionen nicht von denen der über DBTL-Katalyse synthetisierten, wässrigen, strahlenhärtbaren Polyurethandispersionen abweichen.

Überraschender Weise wurde gefunden, dass Bismuthsalze in Gegenwart von Säuren mit einem pKa < 2,5 hervorragend geeignet sind, um Polyurethanacrylate für wässrige, strahlenhärtbare Polyurethandispersionen zu synthetisieren. Die auf diese Weise katalysierten Polyurethanacrylate für wässrige, strahlenhärtbare Polyurethandispersionen entsprechen in den physikalischen und anwendungstechnischen Eigenschaften den DBTL-katalysierten Polyurethanacrylaten für wässrige, strahlenhärtbare Polyurethandispersionen. Weiterhin ist es Aufgabe einer bevorzugten Ausführungsform dieser Erfindung, das Gewichtsmittel des Molekulargewichts M_{w} des Polyurethanacrylats auf einen Bereich von 10³ bis 10⁶ g/mol einzustellen. Dabei können Gewichtsmittel des Molekulargewichts M_{w} von Polyurethanacrylaten erreicht werden, wie sie für DBTL-katalysierte Systeme erreicht werden.

Die Erfindung betrifft strahlenhärtbare, wässrige Dispersionen auf Basis von Polyurethanacrylaten (i), die dadurch gekennzeichnet sind, dass das Polyurethanacrylat (i) als Aufbaukomponenten
A) eine oder mehrere Verbindungen mit mindestens einer gegenüber Isocyanat reaktiven Gruppe und mindestens einer radikalisch polymerisierbaren, ungesättigten Gruppe,
B) eine oder mehrere Verbindungen unterschiedlich von A) mit mindestens einer gegenüber Isocyanat reaktiven Gruppe,
C) eine oder mehrere Verbindungen mit mindestens einer gegenüber Isocyanat reaktiven Gruppe und zusätzlich mindestens einer hydrophilierend wirkenden Gruppe,
D) ein oder mehrere organische Polyisocyanate,
E) gegebenenfalls von A) bis D) verschiedene Verbindungen mit mindestens einer gegenüber Isocyanat reaktiven Gruppe,
   enthält, die in Gegenwart von
F) Bismut(III)salz(en) und
G) einer Säure mit einem pKa < 2,5, bevorzugt < 2,0 als Katalysator umgesetzt werden.

Optional enthält die Dispersion eine Komponente (ii), wobei es sich um Reaktivverdünner, die mindestens eine radikalisch polymerisierbare Gruppe aufweisen, handelt.

"(Meth)acrylat" bezieht sich im Rahmen dieser Erfindung auf entsprechende Acrylat- oder Methacrylatfunktionen oder auf eine Mischung beider.

Aufbaukomponente A) und gegebenenfalls Komponente (ii) werden dabei in solchen Mengen eingesetzt, dass der Gehalt an copolymerisierbaren Doppelbindungen zwischen 0,5 und 6,0, bevorzugt zwischen 1,0 und 5,5, besonders bevorzugt zwischen 1,5 und 5,0 mol/kg nicht wässriger Bestandteile der Dispersion beträgt.

Komponente (ii) wird zu 0 bis 65, bevorzugt 0 bis 40, besonders bevorzugt 0 bis 35 Gew.-% eingesetzt, wobei sich die Gew.-% der Komponenten (i) und (ii) zu 100 Gew.-% addieren.

Komponente A) enthält eine oder mehrere Verbindungen mit mindestens einer gegenüber Isocyanat reaktiven Gruppe und mindestens einer radikalisch polymerisierbaren, ungesättigten Gruppe. Bei solchen Verbindungen handelt es sich beispielsweise um ungesättigte Gruppen enthaltende Oligomere und Polymere wie Polyester(meth)acrylate, Polyether(meth)acrylate, Polyetherester(meth)acrylate, ungesättigten Polyester mit Allyletherstruktureinheiten, Polyepoxy(meth)acrylate und um ungesättigte Gruppen enthaltende Monomere mit einem Molekulargewicht < 700 g/mol sowie Kombinationen der genannten Verbindungen.

Von den Polyester(meth)acrylaten werden als Komponente A) die hydroxylgruppenhaltigen Polyester(meth)acrylate mit einer OH-Zahl im Bereich von 15 bis 300 mg KOH/g Substanz, bevorzugt von 60 bis 200 mg KOH/g Substanz eingesetzt. Bei der Herstellung der hydroxyfunktionellen Polyester(meth)acrylate als Komponente A) können insgesamt 7 Gruppen von Monomerbestandteilen zur Anwendung kommen:

Die erste Gruppe (a) enthält Alkandiole oder Diole oder Gemische dieser. Die Alkandiole weisen ein Molekulargewicht im Bereich von 62 bis 286 g/mol auf. Bevorzugt sind die Alkandiole ausgewählt aus der Gruppe von Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff-enthaltende Diole, wie Diethylenglykol, Triethylenglykol, Tetraethylenglykol, Dipropylenglykol, Tripropylenglykol, Polyethylen-, Polypropylen- oder Polybutylenglykole mit einem Zahlenmittel der Molmassen Mn im Bereich von 200 bis 4000, bevorzugt 300 bis 2000, besonders bevorzugt 450 bis 1200 g/mol. Umsetzungsprodukte der zuvor genannten Diole mit ε-Caprolacton oder anderen Lactonen können ebenfalls als Diole zum Einsatz gelangen.

Die zweite Gruppe (b) enthält drei- und höherwertige Alkohole mit einem Molekulargewicht im Bereich von 92 bis 254 g/mol und / oder auf diesen Alkoholen gestartete Polyether. Besonders bevorzugte drei- und höherwertige Alkohole sind Glycerin, Trimethylolpropan, Pentaerythrit, Dipentaerythrit und Sorbit. Ein besonders bevorzugter Polyether ist das Umsetzungsprodukt von 1 mol Trimethylolpropan mit 4 mol Ethylenoxid.

Die dritte Gruppe (c) enthält Monoalkohole. Besonders bevorzugte Monoalkohole sind ausgewählt aus der Gruppe von Ethanol, 1- und 2-Propanol, 1- und 2-Butanol, 1- Hexanol, 2-Ethylhexanol, Cyclohexanol und Benzylalkohol.

Die vierte Gruppe (d) enthält Dicarbonsäuren mit einem Molekulargewicht im Bereich von 104 bis 600 g/mol und / oder deren Anhydride. Bevorzugte Dicarbonsäuren und deren Anhydride sind ausgewählt aus der Gruppe von Phthalsäure, Phthalsäureanhydrid, Isophthalsäure, Tetrahydrophthalsäure, Tetrahydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure, hydrierte Dimere der Fettsäuren, wie sie unter der sechsten Gruppe (f) aufgelistet sind.

Die fünfte Gruppe (e) enthält Trimellithsäure oder Trimellithsäureanhydrid.

Die sechste Gruppe (f) enthält Monocarbonsäuren, wie z. B. Benzoesäure, Cyclohexancarbonsäure, 2-Ethylhexansäure, Capronsäure, Caprylsäure, Caprinsäure, Laurinsäure, und natürliche und synthetische Fettsäuren, wie z. B. Myristin-, Palmitin-, Margarin-, Stearin-, Behen-, Cerotin-, Palmitolein, Öl-, Icosen-, Linol-, Linolen- und Arachidonsäure.

Die siebte Gruppe (g) enthält Acrylsäure, Methacrylsäure und / oder dimere Acrylsäure.

Geeignete hydroxylgruppenhaltige Polyester(meth)acrylate als Komponente A) enthalten das Umsetzungsprodukt von mindestens einem Bestandteil aus Gruppe (a) oder (b) mit mindestens einem Bestandteil aus Gruppe (d) oder (e) und mindestens einem Bestandteil aus Gruppe (g).

Besonders bevorzugte Bestandteile aus der Gruppe (a) sind ausgewählt aus der Gruppe von Ethandiol, 1,2- und 1,3-Propandiol, 1,4-Butandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, ausgewählt aus der Gruppe von Diethylenglykol, Triethylenglykol, Tetraethylenglykol, Dipropylenglykol, und Tripropylenglykol. Bevorzugte Bestandteile aus der Gruppe (b) sind ausgewählt aus der Gruppe von Glycerin, Trimethylolpropan, Pentaerythrit oder das Umsetzungsprodukt von 1 mol Trimethylolpropan mit 4 mol Ethylenoxid. Besonders bevorzugte Bestandteile aus den Gruppen (d) bzw. (e) sind ausgewählt aus der Gruppe von Phthalsäureanhydrid, Isophthalsäure, Tetrahydrophthalsäureanhydrid, Hexahydrophthalsäure, Hexahydrophthal-säureanhydrid, Maleinsäureanhydrid, Fumarsäure, Bernsteinsäureanhydrid, Glutarsäure, Adipinsäure, Dodecandisäure, hydrierte Dimere der Fettsäuren, wie sie unter der 6. Gruppe (f) aufgelistet sind und Trimellithsäureanhydrid. Bevorzugter Bestandteil aus der Gruppe (g) ist Acrylsäure.

Gegebenenfalls können in diese Polyester(meth)acrylate auch aus dem Stand der Technik allgemein bekannte, dispergierend wirkende Gruppen eingebaut werden. So können als Alkoholkomponente anteilig Polyethylenglykole und / oder Methoxypolyethylenglykole verwendet werden. Als Verbindungen können auf Alkoholen gestartete Polyethylenglykole, Polypropylenglykole und deren Blockcopolymere sowie die Monomethylether dieser Polyglykole verwendet werden. Besonders geeignet ist Polyethylenglykol-mono-methylether mit einem Zahlenmittel der Molmasse Mn im Bereich von 500 bis 1500 g/mol.

Weiterhin ist es möglich, nach der Veresterung einen Teil der noch freien, nicht veresterten Carboxylgruppen, insbesondere die der (Meth)acrylsäure, mit Mono-, Di- oder Polyepoxiden umzusetzen. Bevorzugt als Epoxide sind die Glycidylether von monomerem, oligomerem oder polymerem Bisphenol-A, Bisphenol-F, Hexandiol und / oder Butandiol oder deren ethoxylierte und / oder propoxylierte Derivate. Diese Reaktion kann insbesondere zur Erhöhung der OH-Zahl des Polyester(meth)acrylats verwendet werden, da bei der Epoxid-Säure-Reaktion jeweils eine OH-Gruppe entsteht. Die Säurezahl des resultierenden Produkts liegt zwischen 0 und 20 mg KOH/g, bevorzugt zwischen 0 und 10 mg KOH/g und besonders bevorzugt zwischen 0 und 5 mg KOH/g Substanz. Die Reaktion wird bevorzugt durch Katalysatoren wie Triphenylphosphin, Thiodiglykol, Ammonium- und / oder Phosphoniumhalogeniden und / oder Zirkon- oder Zinnverbindungen wie Zinn(II)ethylhexanoat katalysiert.

Die Herstellung von Polyester(meth)acrylaten wird auf der Seite 3, Zeile 25 bis Seite 6, Zeile 24 der DE-A 4 040 290, auf Seite 5, Zeile 14 bis Seite 11, Zeile 30 der DE-A 3 316 592 und Seite 123 bis 135 von P. K. T. Oldring (Ed.) in Chemistry & Technology of UV & EB Formulations For Coatings, Inks & Paints, Vol. 2, 1991, SITA Technology, London, beschrieben.

Ebenfalls geeignet als Komponente A) sind hydroxylgruppenhaltige Polyether(meth)acrylate, die aus der Umsetzung von Acrylsäure und / oder Methacrylsäure mit Polyethern hervorgehen, so z. B. Homo-, Co- oder Blockcopolymerisate von Ethylenoxid, Propylenoxid und / oder Tetrahydrofuran auf beliebigen hydroxy- und / oder aminfunktionellen Startermolekülen, wie z. B. Trimethylolpropan, Ethylenglykol, Propylenglykol, Diethylenglykol, Dipropylengykol, Glycerin, Pentaerythrit, Neopentylglykol, Butandiol und Hexandiol.

Ebenfalls geeignet als Komponente A) sind die an sich bekannten hydroxylgruppenhaltigen Epoxy(meth)acrylate mit einer OH-Zahl im Bereich von 20 bis 300 mg KOH/g, bevorzugt von 100 bis 280 mg KOH/g, besonders bevorzugt von 150 bis 250 mg KOH/g oder hydroxylgruppenhaltige Polyurethan(meth)acrylate mit einer OH-Zahl im Bereich von 20 bis 300 mg KOH/g, bevorzugt von 40 bis 150 mg KOH/g, besonders bevorzugt von 50 bis 140 mg KOH/g. Solche Verbindungen werden ebenfalls auf Seite 37 bis 56 in P. K. T. Oldring (Ed.), Chemistry & Technology of UV & EB Formulations For Coatings, Inks & Paints, Vol. 2, 1991, SITA Technology, London beschrieben. Hydroxylgruppenhaltige Epoxy(meth)acrylate basieren insbesondere auf Umsetzungsprodukten von Acrylsäure und / oder Methacrylsäure mit Epoxiden (Glycidylverbindungen) von monomeren, oligomeren oder polymeren Bisphenol-A, Bisphenol-F, Hexandiol und / oder Butandiol oder deren ethoxylierten und / oder propoxylierten Derivaten. Hydroxylgruppenhaltige Epoxy(meth)acrylate umfassen ebenfalls die Additionsprodukte von Acrylsäure und / oder Methacrylsäure mit Epoxiden ungesättigter Fette (Fettsäuretriglyceride), wie z. B. Photomer® 3005 F (Fa. Cognis, Düsseldorf, DE).

Bevorzugte ungesättigte Gruppen enthaltende Oligomere und Polymere als Komponente A) sind Verbindungen ausgewählt aus der Gruppe der Polyester(meth)acrylate, Polyether(meth)acrylate, Polyetherester(meth)acrylate und Polyepoxy(meth)acrylate, welche neben den ungesättigten Gruppen noch Hydroxylgruppen aufweisen.

Bei den ungesättigte Gruppen enthaltenden Monomeren mit einem Molekulargewicht < 700 g/mol handelt es sich beispielsweise um 2-Hydroxyethyl(meth)acrylat, Caprolacton-verlängerte Modifikationen von 2-Hydroxyethyl(meth)acrylat wie Pemcure^{®} 12A (Cognis, DE), 2-Hydroxypropyl-(meth)acrylat, 4-Hydroxybutyl(meth)acrylat, 3-Hydroxy-2,2-dimethylpropyl(meth)acrylat, die im Mittel monohydroxyfunktionellen Di-, Tri- oder Penta(meth)acrylate mehrwertiger Alkohole wie Trimethylolpropan, Glycerin, Pentaerythrit, Ditrimethylolpropan, Dipentaerythrit, ethoxyliertes, propoxyliertes oder alkoxyliertes Trimethylolpropan, Glycerin, Pentaerythrit, Ditrimethylolpropan, Dipentaerythrit oder deren technische Gemische.

Außerdem können auch Alkohole, die sich aus der Umsetzung von doppelbindungshaltigen Säuren mit gegebenenfalls doppelbindungshaltigen, monomeren Epoxidverbindungen erhalten lassen, als monohydroxyfunktionelle, (Meth)acrylatgruppen-haltige Alkohole eingesetzt werden. Bevorzugte Umsetzungsprodukte sind ausgewählt aus der Gruppe von (Meth)acrylsäure mit Glycidyl-(meth)acrylat oder dem Glycidylester tertiärer, gesättigter Monocarbonsäure. Tertiäre, gesättigte Monocarbonsäuren sind beispielsweise 2,2-Dimethylbuttersäure, Ethylmethylbutter-, Ethylmethylpentan-, Ethylmethylhexan-, Ethylmethylheptan- und / oder Ethylmethyloktansäure.

Bevorzugt unter den ungesättigte Gruppen enthaltenden Monomeren mit einem Molekulargewicht < 700 g/mol sind 2-Hydroxyethyl(meth)acrylat, 2-Hydroxypropyl(meth)acrylat, Pentaerythrittriacrylat, Dipentaerythritpentaacrylat und das Additionsprodukt aus Ethylmethylheptansäureglycidylester mit (Meth)acrylsäure und deren technische Gemische.

Die unter Komponente A) aufgezählten Verbindungen können für sich alleine als auch als Mischungen verwendet werden.

Die Komponente B) enthält monomere Mono-, Di- und/oder Triole jeweils mit einem Molekulargewicht von 32 bis 240 g/mol, wie z. B. Methanol, Ethanol, 1-Propanol, 1-Butanol, 1-Pentanol, 1-Hexanol, 2-Propanol, 2-Butanol, 2-Ethylhexanol, Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), von Dimerfettsäuren abgeleitete Diole, 2,2-Dimethyl-3-hydroxypropionsäure-(2,2-dimethyl-3-hydroxypropylester), Glycerin, Trimethylolethan, Trimethylolpropan, Trimethylolbutan und / oder Rizinusöl. Bevorzugt sind Neopentylglykol, 1,4-Butandiol, 1,4-Cyclohexandimethanol, 1,6-Hexandiol und / oder Trimethylolpropan.

Des Weiteren enthält Komponente B) oligomere und / oder polymere, hydroxyfunktionelle Verbindungen. Diese oligomeren und / oder polymeren, hydroxyfunktionellen Verbindungen sind beispielsweise Polyester, Polycarbonate, Polyethercarbonatpolyole, C2-, C 3-, und / oder C4-Polyether, Polyetherester, Polycarbonatpolyester mit einer Funktionalität von 1,0 bis 3,0, jeweils mit einem Gewichtsmittel des Molekulargewichts M_{w} im Bereich von 300 bis 4000, bevorzugt 500 bis 2500 g/mol.

Hydroxyfunktionelle Polyesteralkohole sind solche auf Basis von Mono-, Di- und Tricarbonsäuren mit monomeren Di- und Triolen, wie sie bereits als Komponente B) aufgezählt wurden, sowie Polyesteralkohole auf Lacton-Basis. Bei den Carbonsäuren handelt es sich zum Beispiel um Phthalsäure, Isophthalsäure, Terephthalsäure, Trimellithsäure, Adipinsäure, Maleinsäure, Fumarsäure, Tetrahydrophthalsäure, Hexahydrophthalsäure, Malonsäure, Bernsteinsäure, Glutarsäure, Pimelinsäure, Korksäure, Sebacinsäure, Dodecandisäure, hydrierte Dimere der Fettsäuren sowie gesättigte und ungesättige Fettsäuren, wie z. B. Palmitinsäure, Stearinsäure, Myristoleinsäure, Palmitoleinsäure, Ölsäure, Linolsäure, Linolensäure, Rizinolsäure und deren technische Gemische. Von den Di- und Tricarbonsäuren können auch die analogen Anhydride verwendet werden.

Hydroxyfunktionelle Polyetherole sind beispielsweise durch Polymerisation von cyclischen Ethern oder durch Umsetzung von Alkylenoxiden mit einem Startermolekül erhältlich.

Hydroxyfunktionelle Polycarbonate sind hydroxyl-terminierte Polycarbonate, die durch Umsetzung von Diolen, Lacton-modifizierten Diolen oder Bisphenolen, z. B. Bisphenol A, mit Phosgen oder Kohlensäurediestern, wie Diphenylcarbonat oder Dimethylcarbonat, zugängliche Polycarbonate. Hydroxyfunktionelle Polyethercarbonatpolyole sind solche, wie sie zum Aufbau von Polyurethandispersionen in DE-A 102008000478 beschrieben werden.

Die Komponente C) umfasst Verbindungen mit mindestens einer gegenüber Isocyanat reaktiven Gruppe und zusätzlich mindestens einer hydrophilierend wirkenden Gruppe.

Zu den hydrophilierend wirkenden Gruppen gehören ionische Gruppen C1) und/ oder die aus potentiell ionischen Gruppen C2) hervorgehenden (beispielsweise durch Salzbildung) ionischen Gruppen C1), die anionischer Natur C1.1) wie beispielsweise Sulfonium-, Phosphonium-, Carboxylat-, Sulfonat-, Phosphonat-Gruppen oder kationischer Natur C1.2) wie beispielsweise Ammonium-Gruppen sein können, potentiell ionische Gruppen C2), d.h. Gruppen, die beispielsweise durch Salzbildung in ionische Gruppen C1) überführt werden können und / oder nicht-ionische Gruppen C3) wie beispielsweise Polyethergruppen, die durch isocyanatreaktive Gruppen in die Makromoleküle eingebaut werden können. Bevorzugt geeignete isocyanatreaktive Gruppen sind Hydroxyl- und Aminogruppen.

Verbindungen enthaltend potentiell ionische Gruppen C2) umfassen Verbindungen mit potentiell anionischen Gruppen C2.1) wie beispielsweise Mono- und Dihydroxycarbonsäuren, Mono- und Diaminocarbonsäuren, Mono- und Dihydroxysulfonsäuren, Mono- und Diaminosulfonsäuren, Mono- und Dihydroxyphosphonsäuren, Mono- und Diaminophosphonsäuren und/oder Verbindungen mit potentiell kationischen Gruppen C2.2) wie beispielsweise Ethanolamin, Diethanolamin, Triethanolamin, 2-Propanolamin, Dipropanolamin, Tripropanolamin, N-Methylethanolamin, N-Methyl-diethanolamin und N,N-Dimethylethanolamin.

Bevorzugte Verbindungen enthaltend potentiell anionischen Gruppen C2.1) sind ausgewählt aus der Gruppe bestehend aus Dimethylolpropionsäure, Dimethylolbuttersäure, Hydroxypivalinsäure, N-(2-Aminoethyl)-alanin, 2-(2-Amino-ethylamino)-ethansulfonsäure, Ethylendiamin-propyl- oder - butylsulfonsäure, 1,2- oder 1,3-Propylendiamin-ethylsulfonsäure, 3-(Cyclohexylamino)propan-1-sulfonsäure, Äpfelsäure, Zitronensäure, Glykolsäure, Milchsäure, Glycin, Alanin, Taurin, Lysin, 3,5-Diaminobenzoesäure, ein Additionsprodukt von Isophorondiamin (1-Amino-3,3,5-trimethyl-5-aminomethylcyclohexan, IPDA) und Acrylsäure (EP-A 916 647, Beispiel 1), das Addukt von Natriumbisulfit an Buten-2-diol-1,4- Polyethersulfonat sowie das propoxylierte Addukt aus 2-Butendiol und NaHSO₃, wie in DE-A 2 446 440 auf Seite 5-9, Formel I-III beschrieben.

Besonders bevorzugte Verbindungen enthaltend potentiell ionische Gruppen C2) sind Carboxyl-, Sulfonsäuregruppen und/oder tertiäre Aminogruppen enthaltende Verbindungen wie beispielsweise 2-(2-Amino-ethylamino-)ethansulfonsäure, 3-(Cyclohexylamino)propan-1-sulfonsäure, das Additionsprodukt von Isophorondiamin und Acrylsäure (EP 916 647 Al, Beispiel 1), Hydroxypivalinsäure, Dimethylolpropionsäure, Triethanolamin, Tripropanolamin, N-Methyl-diethanolamin und / oder N,N-Dimethylethanolamin.

Ganz besonders bevorzugt enthält Komponente C) als Verbindungen mit potentiell ionischen Gruppen Hydroxypivalinsäure und / oder Dimethylolpropionsäure.

Geeignete nicht-ionisch hydrophilierend wirkende Gruppen C3) sind beispielsweise Polyalkylenoxidether, die mindestens eine Hydroxy- oder Aminogruppe, sowie eine oder mehrere Alkylenoxideinheiten, von denen wenigstens eine Ethylenoxideinheit ist, enthalten. Diese Polyalkylenoxidether sind in an sich bekannter Weise durch Alkoxylierung geeigneter Startermoleküle zugänglich.

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Ebenfalls geeignet ist Trimethylolpropan, das nur an einer OH-Gruppe alkoxyliert wird. Bevorzugte Startermoleküle sind gesättigte Monoalkohole und Trimethylolpropan, das nur an einer OH-Gruppe alkoxyliert wird. Besonders bevorzugt wird Diethylenglykolmonobutylether als Startermolekül verwendet.

Für die Alkoxylierungsreaktion geeignete Alkylenoxide sind beispielsweise Ethylenoxid, 1-Butenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% Ethylenoxideinheiten umfassen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen. Ebenfalls bevorzugt sind Trimethylolpropan-gestartete Polyalkylenoxide mit einer OH-Funktionalität von 2, wie z. B. Tegomer® D 3403 (Evonik Industries AG, Essen, DE) und Ymer® N 120 (Perstorp AB, Schweden).

Die unter Komponente C2.1) genannten Säuren werden durch Umsetzung mit Neutralisationsmitteln, wie Triethylamin, Ethyldiisopropylamin, Dimethylcyclohexylamin, Dimethylethanolamin, Ammoniak, N-Ethylmorpholin, LiOH, NaOH und / oder KOH in die entsprechenden Salze überführt. Der Neutralisationsgrad liegt dabei bevorzugt zwischen 50 und 125%. Der Neutralisationsgrad ist wie folgt definiert: Bei säurefunktionalisierten Polymeren als Quotient aus Base und Säure; bei basefunktionalisierten Polymeren als Quotient aus Säure und Base. Liegt der Neutralisation über 100%, so wird bei säurefunktionalisierten Polymeren mehr Base zugegeben als Säuregruppen im Polymer vorhanden sind; bei basefunktionalisierten Polymeren wird mehr Säure zugegeben als Basegruppen im Polymer vorhanden sind.

Die unter Komponente C2.2) genannten Basen werden durch Umsetzung mit Neutralisationsmitteln, wie z. B. anorganische Säuren, wie beispielsweise Salzsäure, Phosphorsäure und / oder Schwefelsäure, und / oder organischen Säuren, wie beispielsweise Ameisensäure, Essigsäure, Milchsäure, Methan-, Ethan- und / oder p-Toluolsulfonsäure, in die entsprechenden Salze überführt. Der Neutralisationsgrad liegt dabei bevorzugt zwischen 50 und 125%.

Die unter Komponente C) aufgeführten Verbindungen können auch in Mischungen verwendet werden.

Die ionische Hydrophilierung und die Kombination von ionischer und nicht-ionischer Hydrophilierung sind gegenüber der rein nicht-ionischen Hydrophilierung bevorzugt.

Die Komponente D) sind Polyisocyanate ausgewählt aus der Gruppe von aromatischen, araliphatischen, aliphatischen oder cycloaliphatischen Polyisocyanaten oder Mischungen solcher Polyisocyanate. Geeignete Polyisocyanate sind beispielsweise 1,3-Cyclohexandiisocyanat, 1-Methyl-2,4-diisocyanato-cyclohexan, 1-Methyl-2,6-düsocyanato-cyclohexan, Tetramethylendiisocyanat, 4,4'-Diisocyanatodiphenylmethan, 2,4'-Diisocyanatodiphenylmethan, 2,4-Diisocyanatotoluol, 2,6-Diisocyanatotoluol, α,α,α',α,'-Tetra-methyl-m- oder p-Xylylendiisocyanat, 1,6-Hexamethylendiisocyanat, 1-Isocyanato-3,3,5-trimethyl-5-isocyanatomethylcyclohexan (Isophorondiisocyanat oder IPDI), 4,4'-Diisocyanato-dicyclohexylmethan, 4-Isocyanatomethyl-1,8-octan-diisocyanat (Triisocyanatononan, TIN) (EP-A 928 799), Homologe bzw. Oligomere dieser aufgezählten Polyisocyanate mit Biuret-, Carbodiimid-, Isocyanurat-, Allophanat-, Iminooxadiazindion- und/ oder Uretdiongruppen, und deren Mischungen. Bevorzugt sind 1,6-Hexamethylendiisocyanat, 1-Isocyanato-3,3,5-trimethyl-5-isocyanatomethylcyclohexan (Isophorondiisocyanat oder IPDI) und 4,4'-Diisocyanato-dicyclohexylmethan, Homologe bzw. Oligomere von 1-Isocyanato-3,3,5-trimethyl-5-isocyanatomethylcyclohexan (Isophorondiisocyanat oder IPDI) und 4,4'-DÜsocyanato-dicyclohexylmethan mit Biuret-, Carbodiimid-, Isocyanurat-, Allophanat-, Iminooxadiazindion- und / oder Uretdiongruppen und, deren Mischungen.

Zur Erhöhung des Gewichtsmittel des Molekulargewichts M_{w} der Polyurethanacrylate werden Mono- und Diamine und / oder mono- oder difunktionelle Aminoalkohole als Komponente E) verwendet. Bevorzugte Diamine sind solche, die gegenüber den Isocyanatgruppen reaktiver sind als Wasser, da die Verlängerung des Polyesterurethan(meth)acrylats gegebenenfalls im wässrigen Medium stattfindet. Besonders bevorzugt sind die Diamine ausgewählt aus der Gruppe von Ethylendiamin, 1,6-Hexamethylendiamin, Isophorondiamin, 1,3-, 1,4-Phenylendiamin, Piperazin, 4,4`-Diphenylmethandiamin, aminofunktionelle Polyethylenoxide, aminofunktionelle Polypropylenoxide (bekannt unter dem Namen Jeffamin^{®} D-Reihe [Huntsman Corp. Europe, Zavantem, Belgien]) und Hydrazin. Ganz besonders bevorzugt ist Ethylendiamin.

Bevorzugte Monoamine sind ausgewählt aus der Gruppe von Butylamin, Ethylamin und Amine der Jeffamin^{®} M-Reihe (Huntsman Corp. Europe, Zavantem, Belgien), aminofunktionelle Polyethylenoxide, aminofunktionelle Polypropylenoxide und / oder Aminoalkohole.

Als Katalysatoren F) für die Urethanisierung zur Herstellung der erfindungsgemäßen strahlenhärtbaren Polyurethandispersionen werden Bismuth(III)salze eingesetzt, wie z. B. Bismuth (III)bromid, Bismuth(III)chlorid, Bismuth(III)fluorid, Bismuth(III)iodid, Bismuth(III)nitrat, Bismuth(III)oxid, Bismuth(III)phosphat, Bismuth(III)sulfid, Bismuth(III)trifluormethansulfonat, Bismuth(III)acetat, Bismuth(III)neodecanoat, Bismuth(III)salicylat, Bismuth(III)-2,2,6,6-tetramethyl-3,5-heptandionat, Bismuth(III)-2-ethylhexanoat, Bismuth(III)naphthanat (Salz von Naphthansäuren: im Durchschnitt C6 bis C7-Cyclocarbonsäuren gewonnen aus einer Naphthafraktion) und Bismuth(III)citrat.

Bevorzugt eingesetzt werden Bismuth(III)carboxylate wie Bismuth(III)acetat, Bismuth(III)neodecanoat, Bismuth(III)salicylat, Bismuth(III)-2,2,6,6-tetramethyl-3,5-heptandionat, Bismuth(III)-2-ethylhexanoat, Bismuth(III)naphthanat und Bismuth(III)citrat. Besonders bevorzugt sind Bismuth(III)neodecanoat, Bismuth(III)-2-ethylhexanoat und Bismuth(III)citrat.

Als Säuren G), die in Kombination mit den Bismuth(III)salzen eingesetzt werden, kommen organische und / oder anorganische Säuren mit einem pKa < 2,5, bevorzugt < 2,0 in Betracht.

Geeignete Säuren sind beispielsweise Chlor-, Brom- und Iod-Wasserstofffsäure, Chlorige Säure, Chlorsäure, Perchlorsäure, Iodsäure, Periodsäure, Perchromsäure, Salpetersäure, Phosphorsäure, Phosphorige Säure, Hypophosphorige Säure, Diphosphorsäure, Selensäure, Selenige Säure, Schweflige Säure, Schwefelsäure, Hydrogensulfate, Thicyansäure, Phosphorsäure-methyl-, -ethyl-, -n-propyl-, -n-butyl-, -dimethyl-, -di-(n-propyl)-, -di-(n-butyl)- und di-(2-ethylhexyl)ester, Methansulfonsäure, p-Toluolsulfonsäure, 2,6-Dihydroxybenzoesäure, Amidosulfonsäure Nitroessigsäure, Trimethylammoniumessigsäure, Dichloro-, Difluoro-, Tribromo-, Trichloro- und Trifluoro-Essigsäure, Malonsäure, Maleinsäure, Bromomaleinsäure, Chloromaleinsäure, Chlorofurmarsäure, Bromofurmarsäure, Oxalsäure, Oxalursäure, Oxanilsäure, 4-Nitrobenzoesäure, protonierte Aminosäuren mit einem pKa < 2,5 und Saccharin.

Bevorzugt sind Phosphorsäure-di-(n-butyl)-ester, Methansulfonsäure und p-Toluolsulfonsäure.

Es wurde überraschenderweise gefunden, dass sich über das Verhältnis von Säure G) zu Bismuthsalz F) das Gewichtsmittel des Molekulargewichts M_{w} des Polyurethanacrylats (i) steuern lässt.

Bismuth(III)salze werden in Bezug auf den Feststoffgehalt der wässrigen, strahlenhärtbaren Polyurethandispersion (Menge des Rückstandes nach Abdampfen aller flüchtigen Bestandteile) in Mengen von 1 bis 30000 ppm, bevorzugt 10 bis 10000 ppm, besonders bevorzugt 50 bis 1000 ppm eingesetzt. Die Menge an Säure, die in Kombination mit dem Bismuth(III)salz eingesetzt wird, bezieht sich auf die Menge an eingesetztem Bismuth(III)salz und liegt zwischen 10 bis 300 mol%, bevorzugt 15 bis 150 mol%, besonders bevorzugt 20 bis 110 mol%.

Maximale Gewichtsmittel des Molekulargewichts M_{w} des Polyurethanacrylats (i) werden erreicht, wenn 100 mol% Säure G) im Verhältnis zum Bismuth(III)salz F) verwendet werden.

Die nach dem erfindungsgemäßen Verfahren hergestellten strahlenhärtbaren, wässrigen Polyurethanacrylate (i) weisen ein Gewichtsmittel des Molekulargewichts M_{w} von 10³ bis 10⁶ g/mol, bevorzugt 3*10³ bis 9*10⁵ g/mol, besonders bevorzugt 10⁴ bis 7*10⁵ g/mol auf. Die Bestimmung des Gewichtsmittel des Molekulargewichts M_{w} des Polyurethanacrylats erfolgte mit Hilfe der Gelpermeationschromatographie mit Polystyrol als Standard und N,N-Dimethylacetamid als mobile Phase.

Die Komponente (ii) sind Reaktivverdünner, unter denen Verbindungen zu verstehen sind, die mindestens eine radikalisch polymerisierbare Gruppe, bevorzugt Acrlyat- und Methacrylatgruppen, und bevorzugt keine gegenüber Isocyanat- oder Hydroxygruppen reaktiven Gruppen enthalten. Bevorzugte Verbindungen (ii) weisen 2 bis 6, besonders bevorzugt 4 bis 6 (Meth)acrylatgruppen auf.

Besonders bevorzugte Verbindungen (ii) weisen einen Siedepunkt von mehr als 200 °C bei Normaldruck auf.

Reaktiwerdünner sind allgemein in P. K. T. Oldring (Herausgeber), Chemistry & Technology of UV & EB Formulations for Coatings, Inks & Paints, Vo. II, Chapter III: Reactive Diluents for UV & EB Curable Formulations, Wiley and SITA Technology, London 1997 beschrieben.

Reaktiwerdünner sind beispielsweise die mit (Meth)acrylsäure vollständig veresterten Alkohole Methanol, Ethanol, 1-Propanol, 1-Butanol, 1-Pentanol, 1-Hexanol, 2-Propanol, 2-Butanol, 2-Ethylhexanol, Dihydrodicyclopentadienol, Tetrahydrofurfurylalkohol, 3,3,5-Trimethylhexanol, Octanol, Decanol, Dodecanol, Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), Glycerin, Trimethylolethan, Trimethylolpropan Trimethylolbutan, Pentaerythrit, Ditrimethylolpropan, Dipentaerythrit, Sorbitol sowie ethoxylierte und / oder propoxylierte Derivate der aufgeführten Alkohole und die bei der (Meth)acrylierung der vorgenannten Verbindungen anfallenden technischen Gemische.

Die Komponente (ii) ist bevorzugt ausgewählt aus der Gruppe von (Meth)acrylaten von Tetrolen und Hexolen, wie (Meth)acrylate von Pentaerythrit, Ditrimethylolpropan, Dipentaerythrit, Sorbitol, ethoxyliertes, propoxyliertes oder alkoxyliertes Pentaerythrit, Ditrimethylolpropan, Dipentaerythrit, Sorbitol sowie ethoxylierte und / oder propoxylierte Derivate der aufgeführten Alkohole und die bei der (Meth)acrylierung der vorgenannten Verbindungen anfallenden technischen Gemische.

Zur Herstellung der erfindungsgemäßen Dispersionen können sämtliche, aus dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der Organischen Chemie, Houben-Weyl, 4. Auflage, Band E20 / Teil 2 auf Seite 1682, Georg Thieme Verlag, Stuttgart, 1987. Bevorzugt ist das Schmelz-Emulgier- und das Aceton-Verfahren. Besonders bevorzugt wird das Aceton-Verfahren.

Gegenstand der Erfindung ist auch ein Verfahren zur Herstellung strahlenhärtbarer, wässriger Dispersionen auf Basis von Polyurethanacrylaten (i), dadurch gekennzeichnet, dass durch Umsetzen der Komponenten A) bis C) in einem oder mehreren Reaktionsschritten mit Komponente D) in Gegenwart von Komponenten F) und G) ein Polyurethanacrylat (i) erhalten wird, wobei ein Neutralisationsmittel zur Erzeugung der für die Dispergierung notwendigen ionischen Gruppen vor, während oder nach der Herstellung des Additionsproduktes von A) bis D) zugegeben werden kann, gefolgt von einem Dispergierschritt durch Zugabe von Wasser zum Additionsprodukt von A) bis D) bzw. Überführen des Additionsproduktes von A) bis D) in eine wässrige Vorlage, wobei vor, während oder nach der Dispergierung eine Kettenverlängerung mittels Komponente E) erfolgen kann.

Gegenstand der Erfindung ist auch ein Verfahren gemäß vorstehender Beschreibung, bei dem ein oder mehrere Reaktivverdünner (Komponente (ii)), der mindestens eine radikalisch polymerisierbare Gruppe enthält, beigemischt werden.

Zur Herstellung strahlenhärtbarer, wässriger Dispersionen auf Basis von Polyurethanacrylaten (i) werden die Komponenten A), B) und C) im Reaktor vorgelegt und gegebenenfalls mit Aceton verdünnt. Gegebenenfalls kann auch Komponente (ii) zu den Komponenten A) bis C) zugesetzt werden. Zur Katalyse der Addition an das Polyisocyanat D) werden Bismuth(III)salz F) und Säure G) zugesetzt und die Mischung erwärmt, um ein Anspringen der Reaktion zu ermöglichen. In der Regel sind dazu Temperaturen von 30 bis 60 °C nötig. Anschließend dosiert man das oder die Polyisocyanate D) zu. Auch die umgekehrte Variante ist möglich, wobei dann die Polyisocyanate D) vorgelegt und die isocyanatreaktiven Komponenten A), B) und C) zugegeben werden. Die Zugabe der Komponenten A), B) und C) kann auch nacheinander und in beliebiger Reihenfolge erfolgen. Ebenfalls ist eine stufenweise Umsetzung der Komponenten möglich, das heißt die separate Umsetzung von Komponente D) mit einer oder mehreren isocyanatreaktiven Komponenten A), B) und / oder C) bevor das gewonnene Addukt mit den noch nicht verwendeten Komponenten weiter umgesetzt wird.

Statt der Kombination aus Bismuth(III)salz und Säure können auch zuvor das Bismuth(III)salz und die Säure gemischt und als Mischung zugegeben werden. Ebenfalls ist es möglich, die aus dieser Mischung aktive Metallspezies aufzureinigen bzw. zu isolieren und diese als Katalysator zu verwenden.

Zur Kontrolle der Reaktion wird der Isocyanatgehalt in regelmäßigen Abständen über Titration, Infrarot- oder Nahinfrarot-Spektroskopie, bestimmt.

Die molaren Verhältnisse von Isocyanatgruppen in D) zu gegenüber Isocyanat reaktiven Gruppen in A), B) und C) betragen von 0,8 : 1 bis 2,5 : 1, bevorzugt 1,2 : 1 bis 1,5 : 1.

Nach der Herstellung des Polyurethanacrylats (i) nach dem erfindungsgemäßen Verfahren aus den Komponenten A), B), C) und D) in Gegenwart von F) und G) erfolgt, falls dies noch nicht in den Ausgangsmolekülen durchgeführt wurde, die Salzbildung der dispergierend wirkenden Gruppen der Komponenete C). Im Fall, dass Komponente C) saure Gruppen enthält, werden bevorzugt Basen ausgewählt aus der Gruppe von Triethylamin, Ethyldiisopropylamin, Dimethylcyclohexylamin, Dimethylethanolamin, Ammoniak, N-Ethylmorpholin, LiOH, NaOH und / oder KOH eingesetzt. Im Fall, dass Komponente C) basische Gruppen enthält, werden bevorzugt Säuren ausgewählt aus der Gruppe von Milchsäure, Essigsäure, Phosphorsäure, Chlorwasserstoffsäure und / oder Schwefelsäure eingesetzt. Werden als Komponente C) nur Ethergruppen enthaltende Verbindungen eingesetzt, entfällt dieser Neutralisationsschritt.

Im Anschluss kann optional ein Reaktiwerdünner (ii) oder einer Mischung von Reaktivverdünnern (ii) zugegeben werden. Das Zumischen von Komponente (ii) erfolgt bevorzugt bei 30 bis 45 °C. Sobald diese sich gelöst hat, folgt gegebenenfalls der letzte Reaktionsschritt, bei dem im wässrigen Medium eine Molekulargewichtserhöhung und die Ausbildung der für das erfindungsgemäße Beschichtungssystem benötigten Dispersionen stattfinden: Das Polyurethanacrylat (i), synthetisiert aus den Komponenten A), B), C) und D) in Gegenwart von F) und G), und gegebenenfalls der oder die Reaktiwerdünner (ii), gegebenenfalls gelöst in Aceton, werden unter starkem Rühren entweder in das Dispergierwasser, das das oder die Amine E) enthält, eingetragen oder man rührt umgekehrt die Dispergierwasser-Amin-Mischung zu der Polyurethanacrylatlösung. Außerdem bilden sich die Dispersionen aus, die im erfindungsgemäßen Beschichtungssystem enthalten sind. Die eingesetzte Menge an Amin E) hängt von den noch vorhandenen, nicht umgesetzten Isocyanatgruppen ab. Die Umsetzung der noch freien Isocyanatgruppen mit dem Amin E) kann zu 35% bis 150% erfolgen. In dem Fall, dass ein Unterschuss an Amin E) eingesetzt wird, reagieren noch freie Isocyanatgruppen langsam mit Wasser ab. Wird ein Überschuss an Amin E) verwendet, so liegen keine unreagierten Isocyanatgruppen mehr vor, und es wird ein aminfunktionelles Polyurethan erhalten. Bevorzugt werden 80% bis 110%, besonders bevorzugt 90% bis 100% der noch freien Isocyanatgruppen mit dem Amin E) umgesetzt.

In einer weiteren Variante ist es möglich, die Molekulargewichtserhöhung durch das Amin E) bereits in acetonischer Lösung, d.h. vor der Dispergierung, und gegebenenfalls vor oder nach der Zugabe des oder der Reaktiwerdünner (ii) durchzuführen.

In einer weiteren Variante ist es möglich, die Molekulargewichtserhöhung durch das Amin E) nach dem Dispergierschritt durchzuführen.

Falls erwünscht, kann das organische Lösungsmittel - sofern vorhanden - abdestilliert werden. Die Dispersionen haben dann einen Festkörpergehalt von 20 bis 60 Gew.-%, insbesondere 30 bis 58 Gew.-%.

Es ist ebenfalls möglich, Dispergier- und Destillationsschritt parallel, das heißt gleichzeitig oder zumindest teilweise gleichzeitig durchzuführen.

Gegenstand der Erfindung ist auch die Verwendung der erfindungsgemäßen strahlenhärtbaren, wässrigen Dispersionen zur Herstellung von Beschichtungen insbesondere von Lacken und Klebstoffen.

Die erfindungsgemäßen Dispersionen ergeben nach Entfernen des Wassers mit üblichen Methoden, wie Wärme, Wärmestrahlung, bewegter ggf. getrockneter Luft und / oder Mikrowellen, klare Filme. Durch anschließende strahlenchemisch und / oder radikalisch induzierte Vernetzung härten die Filme zu besonders hochwertigen und chemikalienresistenten Lacküberzügen aus.

Zur strahlenchemisch induzierten Polymerisation ist elektromagnetische Strahlung geeignet, deren Energie, gegebenenfalls unter Zusatz von geeigneten Photoinitiatoren, ausreicht, um eine radikalische Polymerisation von (Meth)acrylat-Doppelbindungen zu bewirken.

Bevorzugt erfolgt die strahlenchemisch induzierte Polymerisation mittels Strahlung mit einer Wellenlänge von kleiner 400 nm, wie UV-, Elektronen-, Röntgen- oder Gamma-Strahlen. Besonders bevorzugt ist die UV-Strahlung, wobei die Härtung mit UV-Strahlung in Gegenwart von Fotoinitiatoren ausgelöst wird. Bei den Fotoinitiatoren wird prinzipiell zwischen zwei Typen unterschieden, dem unimolekularen (Typ I) und dem bimolekularen (Typ II). Geeignete (Typ I)-Systeme sind aromatische Ketonverbindungen, wie z. B. Benzophenone in Kombination mit tertiären Aminen, Alkylbenzophenone, 4,4`-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide, 2,4,6-Trimethyl-benzoyl-diphenylphosphinoxid, Bisacylphosphinoxide, Phenylglyoxylsäureester, Campherchinon, a-Aminoalkylphenone, a,a-Dialkoxyacetophenone und a-Hydroxyalkylphenone. Bevorzugt sind Fotoinitiatoren, die leicht in wässrige Beschichtungsmittel einzuarbeiten sind. Solche Produkte sind beispielsweise Irgacure® 500 (eine Mischung von Benzophenon und (1-Hydroxycyclohexyl)phenylketon, Fa. Ciba, Lampertheim, DE), Irgacure® 819 DW (Phenylbis-(2,4,6-trimethylbenzoyl)-phosphinoxid, Fa. Ciba, Lampertheim, DE), Esacure® KIP EM (Oligo-[2-hydroxy-2-methyl-1-[4-(1-methylvinyl)-phenyl]-propanone], Fa. Lamberti, Aldizzate, Italien). Es können auch Gemische dieser Verbindungen eingesetzt werden.

Zur Einarbeitung der Photoinitiatoren können auch polare Lösemittel, wie z. B. Aceton und Isopropanol, verwendet werden.

Vorteilhaft wird die UV-Härtung bei 30 bis 70 °C durchgeführt, weil bei höherer Temperatur der Umsetzungsgrad an (Meth)acrylatgruppen tendenziell erhöht ist. Dies kann bessere Beständigkeitseigenschaften zur Folge haben. Allerdings ist bei der UV-Härtung eine mögliche Temperaturempfindlichkeit des Substrats zu berücksichtigen, so dass optimale Härtungsbedingungen für eine bestimmte Beschichtungsmittel-Substrat-Kombination vom Fachmann in einfachen Vorversuchen zu ermitteln sind.

Der oder die Strahler, die die radikalische Polymerisation auslösen, können dabei ortsfest sein und das beschichtete Substrat wird durch geeignete übliche Vorrichtungen am Strahler vorbeibewegt oder die Strahler sind durch übliche Vorrichtungen beweglich, so dass die beschichteten Substrate während der Härtung ortsfest sind. Es ist auch möglich die Bestrahlung z.B. in Kammern durchzuführen, bei denen das beschichtete Substrat in die Kammer eingebracht wird, anschließend die Strahlung für einen bestimmten Zeitraum eingeschaltet wird, und nach der Bestrahlung das Substrat wieder aus der Kammer entfernt wird.

Gegebenenfalls wird unter Inertgasatmosphäre, d. h. unter Sauerstoffausschluss, gehärtet, um eine Inhibierung der radikalischen Vernetzung durch Sauerstoff zu verhindern.

Erfolgt die Härtung thermisch-radikalisch, eignen sich wasserlösliche Peroxide oder wässrige Emulsionen nicht-wasserlöslicher Initiatoren. Diese Radikalbildner können in bekannter Weise mit Beschleunigern kombiniert werden.

Die erfindungsgemäßen wässrigen, strahlenhärtbaren Polyurethandispersionen lassen sich durch die üblichen Techniken auf unterschiedlichste Substrate applizieren, bevorzugt Spritzen, Walzen, Fluten, Drucken, Rakeln, Gießen, Streichen und Tauchen.

Mit den erfindungsgemäßen wässrigen, strahlenhärtbaren Polyurethandispersionen können grundsätzlich alle Substrate lackiert bzw. beschichtet werden. Bevorzugte Substrate sind ausgewählt aus der Gruppe bestehend aus mineralischen Untergründen, Holz, Holzwerkstoffen, Möbeln, Parkett, Türen, Fensterrahmen, metallischen Gegenständen, Kunststoffen, Papier, Pappe, Kork, mineralischen Substraten, Textilien oder Leder. Sie eignen sich hierbei als Grundierung und / oder als Decklack. Zusätzlich können die erfindungsgemäßen wässrigen, strahlenhärtbaren Polyurethandispersionen auch in oder als Klebstoffe eingesetzt werden, z. B. in Kontaktklebstoffen, in thermoaktivierbaren Klebstoffen oder in Kaschierklebstoffen.

Die erfindungsgemäßen wässrigen, strahlenhärtbaren Polyurethandispersionen können alleine aber auch in Bindemittelmischungen mit anderen Dispersionen eingesetzt werden. Dies können Dispersionen sein, die ebenfalls ungesättigte Gruppen enthalten, wie z. B. ungesättigte, polymerisierbare Gruppen enthaltende Dispersionen auf Polyester-, Polyurethan-, Polyepoxy(meth)acrylat-, Polyether-, Polyamid-, Polysiloxan-, Polycarbonat-, Epoxyacrylat-, Polyesteracrylat-, Polyurethan-Polyacrylat- und / oder Polyacrylatbasis.

Es können auch solche Dispersionen auf Basis von Polyestern, Polyurethanen, Polyethern, Polyamiden, Polyvinylestern, Polyvinylethern, Polysiloxanen, Polycarbonaten, und / oder

Polyacrylaten, in den erfindungsgemäßen Beschichtungssystemen enthalten sein, die funktionelle Gruppen, wie Alkoxysilangruppen, Hydroxygruppen und / oder gegebenenfalls in blockierter Form vorliegende Isocyanatgruppen aufweisen. So können Dual-Cure-Systeme hergestellt werden, die über zwei verschiedene Mechanismen ausgehärtet werden können.

Ebenfalls für Dual-Cure-Systeme können dem erfindungsgemäßen Beschichtungssystem, weiterhin so genannte Vernetzter zugesetzt werden. Es kommen bevorzugt nicht-blockierte und / oder blockierte Polyisocyanate, Polyaziridine, Polycarbodümide sowie Melaminharze in Frage. Besonders bevorzugt sind nicht-blockierte und / oder blockierte, hydrophilierte Polyisocyanate für wässrige Beschichtungsmittel. Bevorzugt werden < 20 Gew.-%, besonders bevorzugt ≤ 10 Gew.-% an festem Vernetzer auf den Festgehalt des Beschichtungsmittels zugesetzt.

Es können auch Dispersionen auf Basis von auf Polyestern, Polyurethanen, Polyethern, Polyamiden, Polysiloxanen, Polyvinylethern, Polybutadienen, Polyisoprenen, Chlorkautschuken, Polycarbonaten, Polyvinylestern, Polyvinylchloriden, Polyacrylaten, Polyurethan-Polyacrylat-, Polyesteracrylat-, Polyetheracrylat-, Alkyd-, Polycarbonat-, Polyepoxy-, Epoxy(meth)acrylatbasis in den erfindungsgemäßen Beschichtungssystemen enthalten sein, die keine funktionellen Gruppen aufweisen. Damit kann der Grad der Vernetzungsdichte reduziert werden, die physikalische Trocknung beeinflusst, z. B. beschleunigt werden, oder eine Elastifizierung bzw. auch eine Haftungsanpassung vorgenommen werden.

Den Beschichtungsmitteln, welche die erfindungsgemäßen wässrigen, strahlenhärtbaren Polyurethanacrylate enthalten, können auch Aminovernetzerharze, auf Melamin- oder Harnstoffbasis und / oder Polyisocyanate mit freien oder mit blockierten Polyisocyanatgruppen, auf Basis von gegebenenfalls hydrophilierenden Gruppen enthaltenden Polyisocyanaten aus Hexamethylendiisocyanat, Isophorondiisocyanat und / oder Toluylidendüsocyanat mit Urethan-, Uretdion-, Iminoxadiazindion-, Isocyanurat-, Biuret- und / oder Allophanatstrukturen zugesetzt sein. Als weitere Vernetzer sind auch Carbodiimide oder Polyaziridine möglich.

Die erfindungsgemäßen Beschichtunsmittel können mit den in der Lacktechnologie bekannten Bindemitteln, Hilfsstoffen und Additiven, wie z. B. Pigmente, Farbstoffe oder Mattierungsmittel versetzt bzw. kombiniert werden. Dies sind Verlaufs- und Benetzungsadditive, Slip-Additive, Pigmente einschließlich Metallic-Effektpigmente, Füllstoffe, Nanopartikel, Lichtschutzpartikel, Anti-Vergilbungsadditive, Verdicker und Additive zur Reduktion der Oberflächenspannung.

Die erfindungsgemäßen Beschichtungsmittel sind für die Beschichtungen von Folien geeignet, wobei zwischen physikalischer Trocknung und UV-Härtung eine Verformung der beschichteten Folie stattfindet.

Besonders geeignet sind die erfindungsmäßigen Beschichtungsmittel für Klarlackanwendungen auf Holz- und Kunststoffsubstraten, bei denen es nach physikalischer Trocknung auf Blockfestigkeit und nach Strahlenhärtung auf gute Resistenzen gegen Chemikalien ankommt.

Ebenfalls besonders geeignet sind die erfindungsmäßigen Beschichtungsmittel für Holz- und Kunststoffanwendungen mit einem Pigmentgehalt ≥ 10 Gew.-%, bezogen auf die gesamte Formulierung. Sollte es aufgrund von hohen Pigmentgehalten zu einer unvollständigen Reaktion der strahlungshärtbaren Gruppen im Beschichtungssystem während der Strahlungshärtung kommen, so werden blockfeste Beschichtungen erhalten.

Beschichtungsmittel enthaltend die erfindungsgemäßen strahlenhärtbaren, wässrigen Dispersionen auf Polyurethanacrylatbasis, sowie Vernetzer auf Basis von Aminoharzen, blockierten Polyisocyanaten, nicht blockierten Polyisocyanaten, Polyaziridinen und / oder Polycarbodiimiden, und / oder ein oder mehrere weitere Dispersionen, sind ebenfalls Gegenstand der vorliegenden Erfindung.

Weiterhin sind Substrate beschichtet mit den erfindungsgemäßen Beschichtungsmitteln ein Gegenstand dieser Erfindung.

### Beispiele

### Methoden:

Die Bestimmung der Gewichtsmittel des Molekulargewichts M_{w} der Polyurethanacrylate mittels Gelpermeationschromatographie erfolgte auf folgendem System:

| | | | | | |
|---|---|---|---|---|---|
| Pumpe | Hewlett Packard 1100 series II | | | | |
| Injektor | Hewlett Packard 1100 series II | | | | |
| Säulenofen | VDS-Optilab Jetstream 2 Plus | | | | |
| Detektor | Brechungsindex-Detektor, Hewlett Packard 1100 series II | | | | |
| Säulen | 1. | P S S | H E M A | 40; | 5 0 x 7,8 m m |
| | 2. | PSS | HEMA | 1000; | 300 x 7,8 mm |
| | 3. | PSS | HEMA | 300; | 300 x 7,8 mm |
| | 4. | PSS | HEMA | 40; | 300 x 7,8 mm |
| | 5. | PSS | HEMA | 40; | 300 x 7,8 mm |
| Mobile Phase | N,N-Dimethylacetamid | | | | |
| Flussrate | 0,6 ml/min | | | | |
| Druck | 100 bar | | | | |
| Temperatur | 30 °C | | | | |
| Injektionsvolumen | 100 µl | | | | |
| Probenkonzentration | 13.4 µ/l | | | | |
| Standard Molekulargewicht | für PSS Polymer-Standard-Service GmbH, Mainz, DE | | | | |
| Molekulare Proben [g/mol] | 162; 374; 1620; 9130; 18100; 32500; 67500; 128000; 246000; 659000; 1000000 | | | | |

Der NCO-Gehalt wurde jeweils gemäß DIN 53185 titrimetrisch verfolgt.

Der Feststoffgehalt der Polyurethandispersion wurde gravimetrisch nach Abdampfen aller nichtflüchtigen Bestandteile gemäß DIN 53216 bestimmt.

Die mittlere Teilchengröße wurde durch Laser-Korrelationsspektroskopie ermittelt.

Die Auslaufzeit wurde gemäß DIN 53211 mit Hilfe des 4 mm DIN-Bechers bestimmt.

Um die Lagerstabilität einer wässrigen, strahlenhärtbaren Polyurethandispersion zu bestimmen, wurde eine Probe über 7 Tage bei 40 °C gelagert und anschließend auf Sedimentation, Koagulation oder Serumbildung begutachtet. Die Probe war lagerstabil (i. 0.), wenn nach Lagerung optisch keine Veränderungen festgestellt wurden.

Katalysatoren zur Synthese der wässrigen, strahlenhärtbare Polyurethandispersionen:
Desmorapid Z: Dibutylzinndilaurat der Fa. Bayer MaterialScience AG, Leverkusen, DE
Desmorapid SO: Zinn(II)-2-ethylhexanoat der Fa. Bayer MaterialScience AG, Leverkusen, DE
Borchikat 24: Bismuth(III)-2-ethylhexanoat der Fa. Borchers GmbH, Langenfeld, DE
Borchikat 22: Zink(II)-2-ethylhexanoat der Fa. Borchers GmbH, Langenfeld, DE
VEXP 0519: Titan(IV)katalysator für 2K-Anwendung der Fa. Johnson Matthey, London, England
VEXP 0588: Zirkonium(IV)katalysator für 2K-Anwendungen der Fa. Johnson Matthey, London, England
VEXP 0584: Zirkonium(IV)katalysator für 2K-Anwendungen der Fa. Johnson Matthey, London, England

### Verwendete Abkürzungen:

FG: Festgehalt, MTG: mittlere Teilchengröße, ALZ: Auslaufzeit, M_{w}: Gewichtsmittel des Molekulargewichts, i.O.: in Ordnung, n.b.: nicht bestimmt

### 1) DBTL-katalysierte Herstellung einer strahlenhärtbaren, wässrigen Polyurethan-dispersion (Vergleichsbeispiel)

400,6 Teile des Polyesteracrylats Laromer^{®} PE 44 F (BASF AG, Ludwigshafen, DE), Komponente A), 5,4 Teile Hexandiol, Komponente B), 34,0 Teile Dimethylolpropionsäure, , Komponente C), 77,2 Teile Hexamethylendiisocyanat, Komponente D), 66,6 Teile 1-Isocyanato-3,3,5-trimethyl-5-isocyanatomethylcyclohexan, Komponente D), und 0,63 Teile (1,0 mmol) Desmorapid Z (Dibutylzinndilaurat der Fa. Bayer MaterialScience AG, Leverkusen, DE) wurden in 190 Teilen Aceton gelöst und bis zu einem NCO-Gehalt von 1,7 Gew.-% (Theorie 1,7 Gew.-%) bei 60 °C unter Rühren umgesetzt. Anschließend erfolgte die Neutralisation durch Zugabe und Unterrühren von 20,2 Teilen Triethylamin. Die klare Lösung wurde unter Rühren in 950 Teilen Wasser eingetragen. Daraufhin wurde eine Mischung aus 8,4 Teilen Ethylendiamin, Komponente E, und 24,0 Teilen Wasser der Dispersion unter Rühren zugesetzt. Im Anschluss wurde das Aceton unter leichtem Vakuum aus der Dispersion abdestilliert. Es wurde eine UV-härtbare, wässrige Polyurethan-Dispersion 1) mit einem Feststoffgehalt (FG) von 39,8 Gew.-%, einer Auslaufzeit (ALZ) von 24 sec, einer mittleren Teilchengröße (MTG) von 80 nm und einem pH-Wert von 8,4 erhalten. Das Gelpermeationschromatogramm zeigte ein Gewichtsmittel des Molekulargewichts M_{w} für das dispergierte Polyurethanacrylat von 2,00*10⁵ g/mol.

Die folgenden Beispiele 2) bis 18) wurden analog zu Beispiel 1) allerdings mit anderen Katalysatoren und ggf. mit Zusatz von Säure durchgeführt.

| **Beispiel** | **1)** **(Vergleich)** | **2)** **(Vergleich)** | **3)** **(Vergleich)** | **4)** **(Vergleich)** |
|---|---|---|---|---|
| Katalysator F) | 0,63 g (1,0 mmol) Desmorapid Z | 0,64 g (1,0 mmol) Borchikat 24 | 0,11 g (1,0mmol) 1,4-Diazabicyclo [2.2.2]octan | 0,10 g (1,0 mmol) Triethylamin |
| Säure G) | - | - | - | - |
| FG | 39,8% | 38,7% | 38,3% | 39,7% |
| MTG [nm] | 80 | 177 | 198 | 171 |
| pH | 8,4 | 8,2 | 8,0 | 8,5 |
| ALZ [sec] | 24 | 24 | 13 | 92 |
| M_{w} [g/mol] | 2,00*10⁵ | 3,61*10⁴ | 1,3*10⁴ | n. b. |
| Lagerstabilität nach 7 d bei 40 °C | i. O. | Sedimentation | Sedimentation | n. b. |

| **Beispiel** | **5)** **(Vergleich)** | **6)** **(Vergleich)** | **7)** **(Vergleich)** | **8)** **(Vergleich)** |
|---|---|---|---|---|
| Katalysator F) | 0,35 g (1,0 mmol) Borchikat 22 | 0,39 g (1 mmol) VEXP 0588 | 0,39 g (1 mmol) VEXP 0584 | 0,49 g (1 mmol) VEXP 0519 |
| Säure G) | - | - | - | - |
| FG | 41,7% | 39,9% | 39,4% | 38,7% |
| MTG [nm] | 248 (Sedimentation) | 57 | 60 | 122 |
| pH | 8,4 | 8,8 | 8,8 | 8,6 |
| ALZ [sec] | 19 | 155 | 107 | 87 |
| M_{w} [g/mol] | 9,41*10³ | n. b. | n. b. | 1,53*10⁴ |
| Lagerstabilität nach 7 d bei 40 °C | n. b. | n. b. | n. b. | i. O. |

Die Beispiele 2) bis 8) zeigen, dass alternative Urethanisierungskatalysatoren, wie sie aus 2K-Anwendungen bekannt sind, nicht geeignet sind, DBTL in Beispiel 1) zu ersetzen. Dazu zählt auch Bismuth(III)-2-ethylhexanoat, Beispiel 2). Beispiele 2), 3), 5) und 8) wiesen im Vergleich zu Beispiel 1) allesamt ein niedrigeres Gewichtsmittel des Molekulargewichts M_{w}, demzufolge eine größere MTG und gegebenenfalls eine unzureichende Lagerstabilität bei erhöhter Temperatur auf. Die Beispiele 4), 6) und 7) waren recht hochviskos und nicht sonderlich feinteilig und reichten nicht an die Qualität von Beispiel 1) heran.

| **Beispiel** | **9)** **(Erf.gemäß)** | **10)** **(Erf.gemäß)** | **11)** **(Erf.gemäß)** | **12)** **(Erf.gemäß)** |
|---|---|---|---|---|
| Katalysator F) | 0,64 g (1,0 mmol) Borchikat 24 | 0,64 g (1,0 mmol) Borchikat 24 | 0,64 g (1,0 mmol) Borchikat 24 | 0,64 g (1,0 mmol) Borchikat 24 |
| Säure G) | 0,04 g (0,2 mmol) Phosphorsäure-di-(n-butyl)ester | 0,10 g (0,5 mmol) Phosphorsäure-di-(n-butyl-)ester | 0,21 g (1,0 mmol) Phosphorsäure-di-(n-butyl)ester | 0,42 g (2,0 mmol) Phosphorsäure-di-(n-butyl)ester |
| FG | 39,3% | 39,1% | 37,7% | 37,8% |
| MTG [nm] | 43 | 40 | 36 | 43 |
| pH | 8,0 | 8,4 | 8,9 | 8,6 |
| ALZ [sec] | 38 | 42 | 54 | 48 |
| M_{w} [g/mol] | 1,73*10⁵ | 2,04*10⁵ | 4,88*10⁵ | 3,92*10⁵ |
| Lagerstabilität nach 7 d bei 40 °C | i. O. | i. O. | i. O. | i. O. |

Die erfindungsgemäßen Beispiele 9) bis 12) zeigen, dass die Kombination von Bismuth(III)-2-ethylhexanoat und der starken Säure Phosphorsäure-di-(n-butyl)ester in Bezug auf MTG, ALZ und M_{w} zu mit Beispiel 1) vergleichbaren Ergebnissen kommt. Die erfindungsgemäßen Beispiele 9) bis 12) zeigen, dass bei gleichbleibender Menge an Bismuthsalz und steigender Menge an Säure das Gewichtsmittel des Molekulargewichts M_{w} des Polyurethanacrylates und die Feinteiligkeit der wässrigen, strahlenhärtbaren Polyurethandispersion zunehmen und bei äquimolaren Mengen an Bismuthsalz und Säure ihr Maximum erreichen. Bei einem Überschuss Säure, im Vergleich zum Bismuthsalz, nimmt das Gewichtsmittel des Molekulargewichts M_{w} wieder ab.

| **Beispiel** | **13)** **(Erf.gemäß)** | **14)** **(Erf.gemäß)** | **15)** **(Erf.gemäß)** |
|---|---|---|---|
| Katalysator F) | 0,40 g (1,0 mmol) Bismuth(III)citrat | 0,73 g (1,0 mmol) Bismuth(III)neo-decanoat | 0,64 g (1,0 mmol) Borchikat 24 |
| Säure G) | 0,04 g (0,2 mmol) Phosphorsäure-di-(n-butyl)ester | 0,04 g (0,2 mmol) Phosphorsäure-di-(n-butyl)ester | 0,02 g (0,2 mmol) Methansulfonsäure |
| FG | 38,4% | 37,1% | 39,4% |
| MTG [nm] | 42 | 32 | 45 |
| pH | 8,8 | 8,8 | 8,6 |
| ALZ [sec] | 56 | 86 | 73 |
| M_{w} [g/mol] | 2,40*10⁵ | 4,89*10⁵ | 4,37*10⁵ |
| Lagerstabilität nach 7 d bei 40 °C | i. O. | i. O. | i. O. |

Die erfindungsgemäßen Beispiele 13) bis 15) zeigen, dass auch andere Bismuth(III)salze und andere starke Säuren den gleichen Effekt zeigen wie Beispiel 9).

| **Beispiel** | **16)** **(Vergleich)** | **17)** **(Vergleich)** | **18)** **(Vergleich)** |
|---|---|---|---|
| Katalysator F) | 0,41 g (1,0 mmol) Desmorapid SO | 0,41 g (1,0 mmol) Desmorapid SO | 0,41 g (1,0 mmol) Desmorapid SO |
| Säure G) | - | 0,04 g (0,2 mmol) Phosphorsäure-di-(n-butyl)ester | 0,20 g (1,0 mmol) Phosphorsäure-di-(n-butyl)ester |
| FG | 40,1% | 40,5% | 41,1% |
| MTG [nm] | 93 | 120 | 191 |
| pH | 8,6 | 8,8 | 8,8 |
| ALZ [sec] | 89 | 27 | 18 |
| M_{w} [g/mol] | 1,81*10⁵ | 8,17*10⁴ | 4,31*10⁴ |
| Lagerstabilität nach 7 d bei 40 °C | i. O. | i. O. | Sedimentation |

Die Beispiele 16) bis 18) zeigen, dass der Zusatz einer starken Säure zu Zinn(II)-2-ethylhexanoat nicht den gleichen Effekt aufweist wie in den Beispielen 9) bis 11). Die Ergebnisse zeigen sogar, dass mit steigender Menge Säure das Gewichtsmittel des Molekulargewichts M_{w} abnimmt.

### 19) Herstellung eines Polyesters (Komponente B)

6574 Teile Isophthalsäure, 1327 Teile Trimethylolpropan, 7207 Teile Neopentylglykol und 4 Teile Fascat^{®} 4100 (Butylstannonsäure, Arcema Inc., Philadelphia, PA, US) wurden gemeinsam unter Rühren auf 190 °C aufgeheizt. Diese Temperatur wurde gehalten, bis eine Säurezahl von weniger als 1,5 mg KOH/g Substanz erreicht war. Es wurde ein Polyester mit einer mittleren Funktionalität von 2,3 und einer Hydroxylzahl von 365 mg KOH/g Substanz erhalten.

### 20) Herstellung einer strahlenhärtbaren, wässrigen Polyurethan-Dispersion

Bei 60 °C wurden zu einer Mischung von 2236 Teilen 4,4'-Diisocyanatodicyclohexylmethan, Komponente D, 2244 Teilen Desmodur^{®} N 3300 (HDI-Trimerisat, Bayer AG, Leverkusen, DE), Komponente D und 0,75 Teilen Dibutylzinndilaurat in 1519 Teilen Aceton 1595 Teile 2-Hydroxyethylacrylat, Komponente A, zudosiert und weiter bei 60 °C verrührt bis ein NCO-Gehalt von 8,2 Gew.-% erreicht wurde. Anschließend wurden bei 40 °C 1373 Teile des Polyesters aus Beispiel 19), Komponente B, gelöst in 421 Teilen Aceton, 305 Teile Dimethylolpropionsäure, Komponente C, und 0,75 Teile DBTL (1,18 mmol) zugegeben und die Mischung auf 60 °C unter Rühren aufgeheizt. Nach Erreichen eines NCO-Gehaltes von 0,6 Gew.-% wurde auf 40 °C abgekühlt, und es folgte die Neutralisation mit 147 Teilen Triethylamin. Die klare Lösung wurde unter Rühren in 11350 Teile Wasser eingetragen. Daraufhin wurde eine Mischung aus 43,6 Teilen Ethylendiamin, Komponente E, und 100 Teilen Wasser der Dispersion unter Rühren zugesetzt. Im Anschluss wurde das Aceton unter leichtem Vakuum aus der Dispersion abdestilliert. Man erhielt eine UV-härtbare, wässrige Polyurethan-Dispersion 20) mit einem Feststoffgehalt von 43 Gew.-%, einer mittleren Teilchengröße von 132 nm und einem pH-Wert von 8,0. Das Gelpermeationschromatogramm der Dispersion zeigte ein Gewichtsmittel des Molekulargewichts M_{w} von 1,68*10⁴ g/mol.

### 21) Herstellung einer erfindungsgemäßen, strahlenhärtbaren, wässrigen Polyurethan-Dispersion

Die Herstellung verlief gemäß Beispiel 20), allerdings wurden statt DBTL 0,76 Teile Borchikat 24 (1,18 mmol) und 0,25 Teile Phosphorsäure-di-(n-butyl)ester (1,18 mmol) verwendet. Man erhielt eine UV-härtbare, wässrige Polyurethan-Dispersion 21) mit einem Feststoffgehalt von 42 Gew.-%, einer mittleren Teilchengröße von 114 nm und einem pH-Wert von 8,7. Das Gelpermeationschromatogramm zeigte ein Gewichtsmittel des Molekulargewichts M_{w} von 1,93*10⁴ g/mol.

### 22) Herstellung einer strahlenhärtbaren, wässrigen Polyurethan-Dispersion

468 g Desmodur^{®} N 3300 (Trimer mit Isocyanuratstruktureinheiten auf Basis von Hexamethylendiisocyanat, Bayer MaterialScience, Deutschland), Komponente D, 2,6 g Neopentylglykol, Komponente B, 34,8 g Dimethylolpropionsäure, Komponente C, 0,40 g DBTL (0,60 mmol) und 0,4 g 2,6-Di-tert-butyl-4-methylphenol (Inhibitor KB^{®}) wurden in 300 g Aceton gelöst und homogenisiert. Bei 55 °C wurden 204,2 g Hydroxyethylacrylat, Komponente A, so zudosiert, dass die Temperatur nicht über 65 °C stieg. Nach Erreichen des theoretischen NCO-Wertes von 0,3 Gew.-% wurde eine Lösung von 3,0 g Ethylendiamin, Komponente E, in 32 g Aceton zugegeben und 30 Minuten gerührt. Nach Zugabe von 19 g Triethylamin wurden 980 g destilliertes Wasser zum Dispergieren zugegeben und das Aceton im leichten Vakuum abdestilliert. Man erhielt eine UV-härtbare, wässrige Polyurethan-Dispersion 22) mit einem Feststoffgehalt von 37%, einem pH-Wert von 7,9 und einer mittleren Teilchengröße von 97 nm. Das Gelpermeationschromatogramm zeigte ein Gewichtsmittel des Molekulargewichts M_{w} von 3,43*10³ g/mol.

### 23) Herstellung einer erfindungsgemäßen, strahlenhärtbaren, wässrigen Polyurethan-Dispersion

Die Herstellung verlief gemäß Beispiel 22), allerdings wurden statt DBTL 0,40 Teile Borchikat 24 (0,60 mmol) und 0,13 Teile Phosphorsäure-di-(n-butyl)ester (0,60 mmol) verwendet. Man erhielt eine UV-härtbare, wässrige Polyurethan-Dispersion 23) mit einem Feststoffgehalt von 39 Gew.-%, einer mittleren Teilchengröße von 103 nm und einem pH-Wert von 8,2. Das Gelpermeationschromatogramm zeigte ein Gewichtsmittel des Molekulargewichts M_{w} von 3,31*10³ g/mol.

Die Beispiele 21) und 23) zeigen im Vergleich zu den Beispielen 20) und 22), dass mit der Kombination Bismuth(III)-2-ethylhexanoat und Phosphorsäure-di-(n-butyl)ester nahezu gleiche wässrige, strahlenhärtbare Polyurethandispersionen synthetisiert werden können wie unter DBTL-Katalyse.

### Formulierungen für Klarlack-Systeme

| | **Klarlack [A-1, A-2] (Gewichststeile)** |
|---|---|
| UV-Dispersion (angepasst auf 40% Festkörper) | 150 |
| Butylglykol / Wasser (1:1) | 12 |
| Irgacure^{®} 500¹ | 1,5 |
| Benetzungsmittel BYK^{®} 346² | 0,3 |
| Verdickungsmittel BYK^{®} 425³ | 0,4 |
| Gesamt | 164,2 |

### Applikations- und Härtungsbedingungen für Klarlack-Systeme

| | **Klarlack [A-1]** | **Klarlack [A-2]** |
|---|---|---|
| Substrat | Holz | Glas |
| Auftrag durch Rakeln | Kastenrakel, 1 x 150 µm, Nassfilm | Kastenrakel, 1 x 150 µm, Nassfilm |
| Entlüftungszeit | 10 min, 50 °C | 10 min, 50 °C |
| Härtung | 3, 5 m/min⁴ (Hg)⁵ | 3, 5 m/min⁴ (Hg)⁵ |

| | | |
|---|---|---|
| Nach der UV-Härtung werden die beschichteten Substrate gelagert (Glas 1 h bei Raumtemperatur im Exsikkator) und anschließend den Prüfungen unterzogen. ¹ eine Mischung von Benzophenon und (1-Hydroxycyclohexyl)phenylketon der Fa. Ciba, Lampertheim, DE ² Lösung eines polyethermodifizierten Polydimethylsiloxans der Fa. BYK, Wesel, DE ³ Lösung eines harnstoffmodifizierten Polyurethans der Fa. BYK, Wesel, DE ⁴ Zum Test der Reaktivität wird die nach der Aushärtung erzielte Härte in Pendelsekunden (nach DIN 53157) in Abhängigkeit von verschiedenen Bandlaufgeschwindigkeiten gemessen. Bleibt die Pendelhärte auch bei höchster Bandgeschwindigkeit bei Werten über 100 Pendelsekunden, so besitzt die Beschichtung eine ausgezeichnete Reaktivität. UV-Anlage der Fa. Barberän, Model HOK - 6/2 (ca. 80 W/cm) | | |

### Daten zur anwendungstechnischen Prüfung von Klarlacksystemen

| **Anwendungstechnische Prüfung** | **Beispiel 1** **(Vergleich)** | **Beispiel 9** **(Erf.gemäß)** | **Beispiel 10** **(Erf.gemäß)** | **Bespiel 11** **(Erf.gemäß)** |
|---|---|---|---|---|
| Filmtransparenz⁶, Klarlack [A-2] | 4-5 | 5 | 5 | 5 |
| Lagerstabilität: 50 °C/24 h | OK | OK | OK | OK |
| Lagerstabilität: 40 °C/28 d | OK | OK | OK | OK |
| Wasserfestigkeit⁷, Klarlack [A-1] | 5 | 5 | 5 | 5 |
| Kaffeebeständigkeit⁷, Klarlack [A-1] | 5 | 5 | 5 | 5 |
| Ethanol/Wasser(50%)-Beständigkeit,⁷ Klarlack [A-1] | 5 | 5 | 5 | 5 |
| Rotweinbeständigkeit⁷, Klarlack [A-1] | 5 | 5 | 5 | 5 |
| Ethanolbeständigkeit(98%)⁷, Klarlack [A-1] | 4-5 | 4-5 | 4-5 | 4-5 |
| Pendelhärte nach König, Klarlack [A-2] nach phk. Trocknung | 14 sec | 13 sec | 14 sec | 15 sec |
| Pendelhärte nach König, Klarlack [A-2] nach UV-Härtung | 152 sec, 145 sec | 154 sec, 140 sec | 155 sec, 145 sec | 151 sec, 140 sec |
| Weissanlaufen nach Verkratzen,⁸ Klarlack [A-2] | 5 | 5 | 5 | 5 |

Die Filmtransparenz wird durch Aufziehen eines Filmes auf einer Glasplatte und anschließender physikalischer Trocknung visuell beurteilt:
Note 5: klar, keine Trübung oder Schleierbildung erkennbar
Note 4: bei einem Betrachtungswinkel von ca. 10 bis 20 ° ist eine leichte Schleierbildung erkennbar
Note 3: bei einem Betrachtungswinkel von ca. 45 bis 80° ist eine leichte Trübung erkennbar
Note 2: deutliche Trübung
Note 1: matte Oberfläche bzw. griesige Oberfläche

Die Beständigkeitseigenschaften werden nach 16 Stunden Belastung durch optische Inaugenscheinnahme beurteilt:
Note 5: Keine sichtbaren Veränderungen (keine Beschädigung).
Note 4: Leichte Glanz- oder Farbtonveränderung, nur sichtbar, wenn sich die Lichtquelle in der Prüfoberfläche auf oder dicht neben der Markierung spiegelt und direkt zum Auge des Betrachters reflektiert wird, oder einige eben erkennbare, abgegrenzte Markierungen (Quellungsring erkennbar, bzw. keine Erweichung mit dem Fingernagel erkennbar).
Note 3: Leichte Markierung aus mehreren Blickwinkeln zu sehen, zum Beispiel ein eben erkennbarer fast völliger Kreis oder Kreisfläche (Quellungsring erkennbar, Kratzspuren des Fingernagels erkennbar)
Note 2: Starke Markierung, die Oberflächenstruktur ist jedoch weitgehend unverändert. (geschlossener Quellungsring, Kratzspuren feststellbar).
Note 1: Starke Markierung, die Oberflächenstruktur ist jedoch weitgehend unverändert, Markierung ist bis zum Untergrund durchkratzbar
Note 0: Starke Markierung, die Oberflächenstruktur ist verändert oder das Oberflächenmaterial ist ganz oder teilweise zerstört oder das Filterpapier haftet an der Oberfläche.

Das Weissanlaufen nach Verkratzung wird durch Verkratzen mittels einer Münze geprüft. Ist an der Verkratzungsstelle keinerlei Weissanlaufen erkennbar, dann wird dieses Ergebnis als exzellent beurteilt (Note 5).

Die anwendungstechnische Prüfung der Bindemittel aus den Beispielen 9, 10 und 11 im Klarlack zeigt, dass in Relation zum Klarlack, hergestellt aus dem DBTL-katalysierten Bindemittel von Beispiel 1, gleich gute Ergebnisse erreicht werden.

## Patentansprüche

1. Strahlenhärtbare, zinnfreie wässrige Dispersionen auf Basis von Polyurethanacrylaten (i), **dadurch gekennzeichnet, dass** das Polyurethanacrylat (i) als Aufbaukomponenten
A) eine oder mehrere Verbindungen mit mindestens einer gegenüber Isocyanat reaktiven Gruppe und mindestens einer radikalisch polymerisierbaren, ungesättigten Gruppe,
B) eine oder mehrere Verbindungen unterschiedlich von A) mit mindestens einer gegenüber Isocyanat reaktiven Gruppe,
C) eine oder mehrere Verbindungen mit mindestens einer gegenüber Isocyanat reaktiven Gruppe und zusätzlich mindestens einer hydrophilierend wirkenden Gruppe,
D) ein oder mehrere organische Polyisocyanate,
enthält, die in Gegenwart von
F) Bismuth(III)salz(en) und
G) einer Säure mit einem pKa < 2,5 umgesetzt werden.

2. Strahlenhärtbare, wässrige Dispersionen gemäß Anspruch 1, **dadurch gekennzeichnet, dass** eine Komponente E) mit mindestens einer gegenüber Isocyanat reaktiven Gruppe enthalten ist, die von A) bis D) verschieden ist.

3. Strahlenhärtbare, wässrige Dispersionen auf Basis von Polyurethanacrylaten (i) gemäß Anspruch 1 oder 2, **dadurch gekennzeichnet, dass** die wässrige Dispersion als Komponente (ii), einen Reaktiwerdünner mit mindestens einer radikalisch polymerisierbaren Gruppe enthält.

4. Strahlenhärtbare, wässrige Dispersionen gemäß einem der Ansprüche 1 bis 3, **dadurch gekennzeichnet, dass** Komponente F) ein oder mehrere Bismut(III)carboxylate ist.

5. Strahlenhärtbare, wässrige Dispersionen gemäß einem der Ansprüche 1 bis 4, **dadurch gekennzeichnet, dass** Komponente F) mindestens eine Komponente ausgewählt aus der Gruppe bestehend aus Bismut(III)neodecanoat, Bismut(III)-2-etylhexanoat und Bismut(III)citrat ist.

6. Strahlenhärtbare, wässrige Dispersionen gemäß einem der Ansprüche 1 bis 5, **dadurch gekennzeichnet, dass** Komponente G) mindestens eine Komponente ausgewählt aus der Gruppe bestehend aus Phosphorsäure-di-(n-butyl)ester, Methansulfonsäure und p-Toluolsulfonsäure ist.

7. Strahlenhärtbare, wässrige Dispersionen gemäß einem der Ansprüche 1 bis 6, **dadurch gekennzeichnet, dass** Komponente F) in Mengen von 1 bis 30000 ppm (bezogen auf den Feststoffgehalt der wässrigen, strahlenhärtbaren Polyurethandispersion(i)) und als Komponente G) 10 bis 300 mol% Säure (bezogen auf die Menge eingesetzter Komponente F)) enthalten ist.

8. Strahlenhärtbare, wässrige Dispersionen gemäß einem der Ansprüche 1 bis 7, **dadurch gekennzeichnet, dass** 100 mol% Komponente G) im Verhältnis zu Komponente F) eingesetzt wird.

9. Strahlenhärtbare, wässrige Dispersionen gemäß einem der Ansprüche 1 bis 8, **dadurch gekennzeichnet, dass** die Polyurethanacrylate (i) ein Gewichtsmittel des Molekulargewichts M_{w} von 10³ bis 10⁶ g/mol aufweisen.

10. Strahlenhärtbare, wässrige Dispersionen gemäß einem der Ansprüche 1 bis 9, **dadurch gekennzeichnet, dass** Komponente A) mindestens eine Komponente ausgewählt aus der Gruppe bestehend aus hydroxyfunktionalisierten Polyester(meth)acrylate, Polyether(meth)acrylate, Polyetherester(meth)acrylate, Epoxy(meth)acrylate, 2-Hydroxyethyl(meth)acrylat, 2-Hydroxypropyl(meth)acrylat, Pentaerythrittriacrylat und Dipentaerythritpentaacrylat ist.

11. Strahlenhärtbare, wässrige Dispersionen auf Basis von Polyurethanacrylaten (i) gemäß einem der Ansprüche 1 bis 10, **dadurch gekennzeichnet, dass** das molare Verhältnis der Isocyanatgruppen von D) zu isocyanatreaktiven Gruppen aus A), B) und C) 0,8 : 1 bis 2,5 : 1 beträgt.

12. Verfahren zur Herstellung der strahlenhärtbaren, wässrigen Dispersionen auf Basis von Polyurethanacrylaten (i) gemäß einem der Ansprüche 1 bis 11, **dadurch gekennzeichnet, dass** durch Umsetzen der Komponenten A) bis C) in einem oder mehreren Reaktionsschritten mit Komponente D) in Gegenwart von Komponenten F) und G) ein Polyurethanacrylat (i) erhalten wird, wobei ein Neutralisationsmittel zur Erzeugung der fiir die Dispergierung notwendigen ionischen Gruppen vor, während oder nach der Herstellung des Additionsproduktes von A) bis D) zugegeben werden kann, gefolgt von einem Dispergierschritt durch Zugabe von Wasser zum Additionsprodukt von A) bis D) bzw. Überführen des Additionsproduktes von A) bis D) in eine wässrige Vorlage, wobei vor, während oder nach der Dispergierung eine Kettenverlängerung mittels Komponente E) erfolgen kann.

13. Verwendung der erfindungsgemäßen strahlenhärtbaren, wässrigen Dispersionen gemäß einem der Ansprüche 1 bis 11 zur Herstellung von Beschichtungen insbesondere von Lacken und Klebstoffen.

14. Beschichtungsmittel enthaltend die erfindungsgemäßen strahlenhärtbaren, wässrigen Dispersionen gemäß einem der Ansprüche 1 bis 11 auf Polyurethanacrylatbasis, sowie Vernetzer auf Basis von Aminoharzen, blockierten Polyisocyanaten, nicht blockierten Polyisocyanaten,
hydrophilierten Polyisocyanaten, Polyaziridinen und / oder Polycarbodiimiden, und / oder ein oder mehrere weitere Dispersionen.

15. Substrate beschichtet mit Beschichtungsmitteln gemäß Anspruch 14.

## Claims

1. Radiation-curable, tin-free aqueous dispersions based on polyurethane acrylates (i), **characterized in that** the polyurethane acrylate (i) comprises as synthesis components
A) one or more compounds having at least one isocyanate-reactive group and at least one free-radically polymerizable unsaturated group,
B) one or more compounds different from A) and having at least one isocyanate-reactive group,
C) one or more compounds having at least one isocyanate-reactive group and additionally at least one hydrophilizing group,
D) one or more organic polyisocyanates,
which are reacted in the presence of
F) bismuth(III) salt(s) and
G) an acid having a pKa < 2.5.

2. Radiation-curable, aqueous dispersions according to Claim 1, **characterized in that** there is a component E) having at least one isocyanate-reactive group that is different from A) to D).

3. Radiation-curable, aqueous dispersions based on polyurethane acrylates (i) according to Claim 1 or 2, **characterized in that** the aqueous dispersion comprises as component (ii) a reactive diluent having at least one free-radically polymerizable group.

4. Radiation-curable, aqueous dispersions according to any of Claims 1 to 3, **characterized in that** component F) is one or more bismuth(III) carboxylates.

5. Radiation-curable, aqueous dispersions according to any of Claims 1 to 4, **characterized in that** component F) is at least one component selected from the group consisting of bismuth(III) neodecanoate, bismuth(III) 2-ethylhexanoate and bismuth(III) citrate.

6. Radiation-curable, aqueous dispersions according to any of Claims 1 to 5, **characterized in that** component G) is at least one component selected from the group consisting of di-n-butyl phosphate, methanesulphonic acid and p-toluenesulphonic acid.

7. Radiation-curable, aqueous dispersions according to any of Claims 1 to 6, **characterized in that** component F) is present in amounts of 1 to 30 000 ppm (based on the solids content of the aqueous, radiation-curable polyurethane dispersion (i)) and as component G) there is 10 to 300 mol% of acid (based on the amount of component F) used).

8. Radiation-curable, aqueous dispersions according to any of Claims 1 to 7, **characterized in that** 100 mol% of component G) is used in relation to component F).

9. Radiation-curable, aqueous dispersions according to any of Claims 1 to 8, **characterized in that** the polyurethane acrylates (i) have a weight-average molecular weight M_{w} of 10³ to 10⁶ g/mol.

10. Radiation-curable, aqueous dispersions according to any of Claims 1 to 9, **characterized in that** component A) is at least one component selected from the group consisting of hydroxy-functionalized polyester (meth)acrylates, polyether (meth)acrylates, polyetherester (meth)acrylates, epoxy (meth)acrylates, 2-hydroxyethyl (meth)acrylate, 2-hydroxypropyl (meth)acrylate, pentaerythritol triacrylate and dipentaerythritol pentaacrylate.

11. Radiation-curable, aqueous dispersions based on polyurethane acrylates (i) according to any of Claims 1 to 10, **characterized in that** the molar ratio of the isocyanate groups of D) to isocyanate-reactive groups from A), B) and C) is 0.8:1 to 2.5:1.

12. Process for preparing the radiation-curable, aqueous dispersions based on polyurethane acrylates (i) according to any of Claims 1 to 11, **characterized in that** reacting components A) to C) in one or more reaction steps with component D) in the presence of components F) and G) gives a polyurethane acrylate (i), it being possible for a neutralizing agent to be added, for generating the ionic groups that are necessary for dispersing, before, during or after the preparation of the adduct of A) to D), followed by a dispersing step by addition of water to the adduct of A) to D) or transfer of the adduct of A) to D) into an aqueous reservoir, it being possible for there to be a chain extension by means of component E) before, during or after the dispersing.

13. Use of the radiation-curable, aqueous dispersions according to any of Claims 1 to 11 for producing coatings, more particularly paints and adhesives.

14. Coating compositions comprising the radiation-curable, aqueous dispersions according to any of Claims 1 to 11 based on polyurethane acrylate, further comprising crosslinkers based on amino resins, blocked polyisocyanates, non-blocked polyisocyanates, hydrophilized polyisocyanates, polyaziridines and/or polycarbodiimides and/or one or more further dispersions.

15. Substrates coated with coating compositions according to Claim 14.

## Revendications

1. Dispersions aqueuses exemptes d'étain durcissables par rayonnement à base d'acrylates de polyuréthane (i), **caractérisées en ce que** l'acrylate de polyuréthane (i) contient en tant que composants constitutifs :
A) un ou plusieurs composés contenant au moins un groupe réactif avec les isocyanates et au moins un groupe insaturé polymérisable par voie radicalaire,
B) un ou plusieurs composés différents de A) contenant au moins un groupe réactif avec les isocyanates,
C) un ou plusieurs composés contenant au moins un groupe réactif avec les isocyanates et également au moins un groupe à action hydrophile,
D) un ou plusieurs polyisocyanates organiques,
qui sont mis en réaction en présence de
F) un ou plusieurs sels de bismuth (III) et
G) un acide d'un pKa < 2,5.

2. Dispersions aqueuses durcissables par rayonnement selon la revendication 1, **caractérisées en ce qu'**un composant E) contenant au moins un groupe réactif avec les isocyanates qui est différent de A) à D) est contenu.

3. Dispersions aqueuses durcissables par rayonnement à base d'acrylates de polyuréthane (i) selon la revendication 1 ou 2, **caractérisées en ce que** la dispersion aqueuse contient en tant que composant (ii) un diluant réactif contenant au moins un groupe polymérisable par voie radicalaire.

4. Dispersions aqueuses durcissables par rayonnement selon l'une quelconque des revendications 1 à 3, **caractérisées en ce que** le composant F) est un ou plusieurs carboxylates de bismuth (III).

5. Dispersions aqueuses durcissables par rayonnement selon l'une quelconque des revendications 1 à 4, **caractérisées en ce que** le composant F) est au moins un composant choisi dans le groupe constitué par le néodécanoate de bismuth (III), le 2-éthylhexanoate de bismuth (III) et le citrate de bismuth (III).

6. Dispersions aqueuses durcissables par rayonnement selon l'une quelconque des revendications 1 à 5, **caractérisées en ce que** le composant G) est au moins un composant choisi dans le groupe constitué par l'ester di(n-butylique) de l'acide phosphorique, l'acide méthanesulfonique et l'acide p-toluènesulfonique.

7. Dispersions aqueuses durcissables par rayonnement selon l'une quelconque des revendications 1 à 6, **caractérisées en ce que** le composant F) est contenu en quantités de 1 à 30 000 ppm (par rapport à la teneur en solides de la dispersion de polyuréthane aqueuse durcissable par rayonnement (i)) et en tant que composant G) 10 à 300 % en moles d'un acide (par rapport à la quantité de composant F) utilisé).

8. Dispersions aqueuses durcissables par rayonnement selon l'une quelconque des revendications 1 à 7, **caractérisées en ce que** 100 % en moles du composant G) est utilisé par rapport au composant F).

9. Dispersions aqueuses durcissables par rayonnement selon l'une quelconque des revendications 1 à 8, **caractérisées en ce que** les acrylates de polyuréthane (i) présentent une moyenne en poids du poids moléculaire M_{w} de 10³ à 10⁶ g/mol.

10. Dispersions aqueuses durcissables par rayonnement selon l'une quelconque des revendications 1 à 9, **caractérisées en ce que** le composant A) est au moins un composant choisi dans le groupe constitué par les (méth)acrylates de polyester à fonction hydroxy, les (méth)acrylates de polyéther, les (méth)acrylates de polyétherester, les (méth)acrylates d'époxy, le (méth)acrylate de 2-hydroxyéthyle, le (méth)acrylate de 2-hydroxypropyle, le triacrylate de pentaérythrite et le pentaacrylate de dipentaérythrite.

11. Dispersions aqueuses durcissables par rayonnement à base d'acrylates de polyuréthane (i) selon l'une quelconque des revendications 1 à 10, **caractérisées en ce que** le rapport molaire entre les groupes isocyanate de D) et les groupes réactifs avec les isocyanates de A), B) et C) est de 0,8:1 à 2,5:1.

12. Procédé de fabrication des dispersions aqueuses durcissables par rayonnement à base d'acrylates de polyuréthane (i) selon l'une quelconque des revendications 1 à 11, **caractérisé en ce qu'**un acrylate de polyuréthane (i) est obtenu par mise en réaction des composants A) à C) en une ou plusieurs étapes de réaction avec le composant D) en présence des composants F) et G), un agent de neutralisation pour la formation des groupes ioniques nécessaires pour la dispersion pouvant être ajouté avant, pendant ou après la fabrication du produit d'addition de A) à D), suivie par une étape de dispersion par ajout d'eau au produit d'addition de A) à D) ou la transformation du produit d'addition de A) à D) en une préparation aqueuse, un allongement des chaînes au moyen du composant E) pouvant avoir lieu avant, pendant ou après la dispersion.

13. Utilisation des dispersions aqueuses durcissables par rayonnement selon l'une quelconque des revendications 1 à 11 pour la fabrication de revêtements, notamment de laques et d'adhésifs.

14. Agent de revêtement contenant les dispersions aqueuses durcissables par rayonnement selon l'une quelconque des revendications 1 à 11 à base d'acrylate de polyuréthane, ainsi que des agents de réticulation à base de résines amino, de polyisocyanates bloqués, de polyisocyanates non bloqués, de polyisocyanates hydrophilisés, de polyaziridines et/ou de polycarbodiimides, et/ou une ou plusieurs dispersions supplémentaires.

15. Substrats revêtus avec des agents de revêtement selon la revendication 14.
